# EUROPÄISCHE PATENTSCHRIFT

(11) **EP 3 809 122 B1**
(45) Veröffentlichungstag und Bekanntmachung des Hinweises auf die Patenterteilung: **22.07.2026**
(21) Anmeldenummer: 20195327.0
(22) Anmeldetag: 09.09.2020
(51) Int. Cl.: G01N 23/046, G01N 23/223, G06T 7/73, G01B 15/04, G06N 20/00

(54) **VORRICHTUNG UND VERFAHREN ZUM BESTIMMEN EINES AUFNAHMEPARAMETERS UND/ODER ZUM BEREITSTELLEN EINER WARTUNGSEMPFEHLUNG FÜR EINE COMPUTERTOMOGRAPHIEANLAGE**
DEVICE AND METHOD FOR DETERMINING A RECORDING PARAMETER AND / OR FOR PROVIDING A MAINTENANCE RECOMMENDATION FOR A COMPUTER TOMOGRAPHY APPARATUS
DISPOSITIF ET PROCÉDÉ DE DÉTERMINATION D'UN PARAMÈTRE D'ENREGISTREMENT ET/OU DE FOURNITURE D'UNE RECOMMANDATION DE MAINTENANCE POUR UNE INSTALLATION DE TOMOGRAPHIE ASSISTÉE PAR ORDINATEUR

(30) Priorität: 13.09.2019 DE 102019213983
(43) Veröffentlichungstag der Anmeldung: 21.04.2021
(73) Patentinhaber: Fraunhofer-Gesellschaft zur Förderung der angewandten Forschung e.V., 80686 München (DE)
(72) Erfinder: UHLMANN, Norman, 91058 Erlangen (DE); GERTH, Stefan, 91058 Erlangen (DE); SALAMON, Michael, 91058 Erlangen (DE); BASTING, Melanie, 91058 Erlangen (DE); VOLAND-SALAMON, Virginia, 91058 Erlangen (DE); SCHIELEIN, Richard, 91058 Erlangen (DE); LEISNER, Johannes, 91058 Erlangen (DE)
(74) Vertreter: Schenk, Markus

(56) Entgegenhaltungen:
- EP-A1- 1 690 115
- EP-A1- 3 451 284
- EP-A2- 2 665 035
- DE-A1- 102005 026 940
- DE-A1- 102012 217 569
- DE-A1- 102018 105 709
- US-A1- 2006 285 645
- US-A1- 2007 162 190
- US-A1- 2015 104 092
- US-A1- 2019 056 338

## Beschreibung

Die vorliegende Erfindung beschäftigt sich mit dem technischen Gebiet der Computertomographie, und im Speziellen mit Computertomographieanlagen. Ausführungsbeispiele der vorliegenden Erfindung beziehen sich auf eine Vorrichtung sowie auf ein Verfahren und ein Computerprogramm zum Bestimmen von mindestens einem Aufnahmeparameter zur Aufnahme von Röntgendaten eines Prüfobjekts mittels einer Computertomographieanlage und/oder zum Bereitstellen einer Wartungsempfehlung für eine Computertomographieanlage. Einige bestimmte Ausführungsbeispiele der vorliegenden Erfindung beziehen sich auf ein kognitives CT-Addon.

### Hintergrund der Erfindung

Mit der industriellen Computertomographie (CT) oder der industriellen Mikro-CT lassen sich innenliegende Strukturen unterschiedlicher Objekte zerstörungsfrei darstellen oder analysieren. Die Bildqualität sowie die Dauer einer Messung sind dabei abhängig von der Wahl der Aufnahmeparameter, d.h. der Parametrisierung der CT-Anlage.

Die Bearbeitung komplexer Fragestellungen ist in der Regel mit einem hohen zeitlichen Aufwand verbunden: Parameter müssen manuell bestimmt und für unterschiedliche Bauteile adaptiert werden. Ungenügend parametrisierte Messungen müssen wiederholt werden. Um Wiederholungsmessungen zu vermeiden, wird häufig sicherheitshalber mehr Messzeit als theoretisch notwendig eingeplant, wodurch wertvolle und teure Arbeitszeit qualifizierten Fachpersonals durch unnötige Tätigkeiten gebunden ist. Die Parametrisierung wird in der Regel von einem Benutzer vorgenommen, daher unterliegt die Optimierung von CT-Messungen einem starken Einfluss der Erfahrung des Benutzers.

Außerdem gibt es praktisch keine Vergleichbarkeit von CT-Dienstleistungsmessungen, die unter unterschiedlichen Rahmenbedingungen entstanden sind. Beispielsweise werden CT- Dienstleistungsmessungen an unterschiedlichen CT-Anlagen von unterschiedlichen Herstellern, von unterschiedlichen Benutzern mit einem unterschiedlichen Erfahrungsschatz, oder an einer CT-Anlage in unterschiedlichen Zuständen betreffend die Wartung durchgeführt. Dies führt dazu, dass in einem Unternehmen bisweilen unterschiedliche Ergebnisse entstehen, wenn sie an verschiedenen Standorten, an verschiedenen CT-Systemen oder eben durch verschiedene CT-Bediener durchgeführt werden. Außerdem ist die Beurteilung der erzielten Bildqualität subjektiv.

Ein weiteres Problem betrifft die Wartung und Pflege der Röntgenkomponenten. Ein wichtiger Aspekt der prädiktiven Wartung ist zum Beispiel die technische Wartung der Röntgenröhre. Die Stabilität der Röntgenstrahlung kann kurzfristig durch eine erneute Fokussierung des Röntgenstrahls verbessert werden. Im langfristigen Betrieb sind allerdings weitere Maßnahmen erforderlich. So kann es im Falle des Einsatzes von Transmissionsröhren nach starker Beanspruchung des Röntgentargets notwendig werden, dieses leicht zu rotieren, um die Intensität der Strahlung wieder zu erhöhen und ein physikalisches Versagen des Targets zu verhindern. Bei wachsender Instabilität ist es zudem hilfreich, die Röhre über einige Stunden zu konditionieren.

Derzeit beruht es auf Erfahrungswissen, wann Wartungsmaßnahmen erforderlich sind. Eine versäumte Wartung kann sich indes negativ auf die Bildqualität, und somit das Analyseergebnis, auswirken, wodurch Wiederholungsmessungen nötig werden. Ferner kann eine versäumte Wartung die Lebenszeit von Komponenten der CT-Anlage verkürzen, wodurch mehr Reparaturen nötig werden, die Reparaturkosten und einen Stillstand der CT-Anlage verursachen.

Sowohl die erfahrungsbasierte Parametrisierung als auch die erfahrungsbasierte Wartung von CT-Anlagen wirken sich also negativ auf die Verfügbarkeit, den Durchsatz und die Analyseergebnisse von CT-Anlagen aus, wodurch hohe Kosten und schlechte Resultate verursacht werden.

Es existieren bereits Ansätze, um die Parametrisierung, beispielsweise von Aufnahmeparametern, bzw. die Quantifizierung der Bildqualität von CT-Messungen zu adressieren [1], [2]. Die überwiegende Mehrheit der Ansätze ist softwaregetrieben, beispielsweise durch simulative Ansätze [3] oder verwendet die vorhandene Röntgenhardware [4].

In einigen Ansätzen wird versucht, tiefe neuronale Netze für die Aufbereitung, Verbesserung, Analyse und Interpretation von CT-Volumendaten zu nutzen. Diese Verfahren werden heutzutage im Bereich der medizinischen CT eingesetzt. Typische Beispiele hierfür sind die Reduktion der Strahlendosis [5], die Findung und Erkennung von Auffälligkeiten im menschlichen Körper [6] oder die Klassifikation von gut- und bösartigen Regionen [7].

Für die Anwendung und Nutzung solcher Verfahren im Bereich der industriellen CT existieren hingegen wenige Aktivitäten, wie z.B. die Erkennung von Lunkern [8] in Rädern, die Segmentierung von Glasfasern [9], oder die Findung von Fremdkörpern in Dual-Energy-Bildern [10].

Wie eingangs erwähnt, ist auch die Wartung von CT-Anlagen ein wichtiger Punkt, der die Qualität der Aufnahmen in einem nicht unerheblichen Maße mitbestimmt. Die Wartung von ganzen CT-Systemen lässt sich jedoch aufgrund ihrer Vielfalt nicht vereinheitlichen. Für die Wartung von einzelnen Komponenten gibt es allerdings auch keinen einheitlichen Wartungsplan. Üblicherweise werden Komponenten gewartet, wenn die Prüfqualität spürbar nachlässt. Ausschlaggebend für die Entscheidung zur Durchführung von Wartungsmaßnahmen ist also das Erfahrungswissen eines Experten. Andererseits sind Ursachen für den Verschleiß vielfältig, sodass eine Vereinheitlichung der Wartung etwa in Form einer Richtlinie nur schwer vorstellbar ist. Die Druckschrift [11] stellt ein lernendes diagnostisches System vor, welches Fehler in einer Maschine erkennt, indem es Daten, die durch die Maschine gewonnen werden, analysiert und Reparaturvorschläge macht. Die Daten werden in diesem Fall durch eine Prüfprozedur gemäß einem Prüfprotokoll generiert. Eine solche Prüfprozedur ist zeitaufwändig und erfordert geplante Intervalle für die Umsetzung eines Prüfprotokolls.

Die Druckschrift [12] schlägt eine Methode und Anlage zur benutzerspezifischen Parametrisierung einer Röntgenanlage vor. Dabei wird im medizinischen Kontext die Optimierung der Bildqualität für einen definierten Nutzer vorgesehen.

Im Bereich der CT an Menschen ist es bekannt, Kameras zu nutzen um die Position charakteristischer Körperteile eines Patienten bezüglich einem Kooridnatensystem der CT-Anlage zu bestimmen, vgl. US 2015/0104092 A1.

Die DE 10 2018 105 709 A1 beschreibt ferner ein Verfahren zur Untersuchung eines Werkstücks mittels Computertomographie, bei welchem vorgesehen ist, vor einer späteren eigentlichen Computertomographie Vorabdurchstrahlungsbilder aufzunehmen, um einen Aufnahmeparameter zu bestimmen.

Weiterer im Zusammenhang mit CT-Aufnahmen stehender Stand der Technik ist aus den EP 1 690 115 A1, EP 3 451 284 A1, US 2006/285645 A1, US 2019/056338A1, DE 10 2005 026940 A1 und US 2007/162190 A1 bekannt.

Alle bisher bekannten Ansätze liefern zwar, ihrem jeweiligen Einsatzzweck entsprechend, relativ brauchbare Ergebnisse zur Optimierung einer CT-Anlage. Allerdings ist die Durchführung der bisher bekannten Techniken und Verfahren teils sehr zeitintensiv und aufwändig, sodass die Effizienz der CT-Anlagen bisher noch eher unbefriedigend ist.

Von daher wäre es wünschenswert, bekannte Vorrichtungen und Verfahren für die Optimierung von CT-Anlagen dahingehend zu verbessern, dass die Effizienz, d.h. der Durchsatz, der Computertomographieanlage und auch die Qualität der von der Computertomographieanlage gelieferten Ergebnisse gesteigert werden können, wobei die Bedienung der CT-Anlage gleichzeitig anwenderfreundlicher und einfacher gestaltet werden kann, und Messungen bzw. Aufnahmen mit deutlich reduziertem Zeitaufwand durchführbar sind.

Die vorliegende Erfindung ist in den unabhängigen Ansprüchen 1 und 13 definiert. Weitere Ausführungsformen sind in den abhängigen Ansprüchen definiert.

Vorgeschlagen wird daher eine Vorrichtung zum Bestimmen von mindestens einem Aufnahmeparameter zur Aufnahme von einer oder mehreren

Röntgenprojektionen eines Werkstücks mittels einer Computertomographieanlage (CT-Anlage), beispielsweise einer Micro-CT-Anlage. Die Vorrichtung weist eine Messvorrichtung auf, die ausgestaltet ist, um Messdaten, beispielsweise multimodale Daten, über das Werkstücks bereitzustellen, wobei die Messdaten der Messvorrichtung mindestens eine mittlere physikalische Dichte des Werkstücks und/oder eine Masse des Werkstücks beinhalten, beispielsweise durch geeignete Sensoren. Die Messvorrichtung kann ein eigenständiges Gerät sein oder kann in eine CT-Anlage integriert sein oder kann zumindest dafür ausgestaltet sein, um in eine CT-Anlage integriert zu werden. Ferner kann die Messvorrichtung beispielsweise ausgestaltet sein, um Messdaten über das Prüfobjekt zu verarbeiten, beispielsweise um einen oder mehrere Messwerte mit einem oder mehreren anderen Messwerten oder einem oder mehreren anderweitig verfügbaren Werten über das Prüfobjekt zu kombinieren. Ferner weist die Vorrichtung einen Datenanalysator auf, der unter Verwendung der Messdaten der Messvorrichtung und unter Verwendung eines Vorhersagemodells, den mindestens einen Aufnahmeparameter, beispielsweise einen objektspezifischen Aufnahmeparameter, für die Computertomographieanlage bereitstellt. Das Vorhersagemodell weist ein selbstlernendes algorithmisches Verfahren auf und basiert auf einer Vielzahl von Datensätzen, wobei jeder der Datensätze mindestens eine der folgenden Informationen aufweist:
eine Prüfaufgabe, eine Objektform eines Werkstücks, eine Dichteverteilung eines Werkstücks, eine physikalische Dichte eines Werkstücks, eine Masse des Werkstücks, eine Röntgenprojektion eines Werkstücks, einen CT-Volumendatensatz eines Werkstücks, einen Aufnahmeparameter einer Röntgenprojektion und/oder eines CT-Volumendatensatzes, eine Statusinformation betreffend die Computertomographieanlage, ein oder mehrere Messdaten über ein Werkstück, ein oder mehrere Röntgendaten über ein Werkstück, eine Information über eine Bildqualität von Röntgendaten eines Werkstücks.

Die Kombination aus dem Erhalten der Messdaten und der Verwendung des Vorhersagemodells bietet den Vorteil, zum Bestimmen der Aufnahmeparameter nicht vorab auf Informationen über das Prüfobjekt und die Fragestellung (d.h. die Prüfaufgabe) angewiesen zu sein. Durch das Bereitstellen von Messdaten über das Prüfobjekt durch die Messvorrichtung sind auch ohne Vorwissen Informationen über das Prüfobjekt vor einer CT-Aufnahme des Prüfobjekts mittels der CT-Anlage verfügbar. Dadurch bietet sich die Möglichkeit den mindestens einen Aufnahmeparameter unter der Vorkenntnis der Messdaten über das Prüfobjekt zu bestimmen. Durch die zusätzlichen Informationen über das Prüfobjekt, kann ein Aufnahmeparameter spezifisch an das Prüfobjekt angepasst werden. Durch eine Anpassung eines Aufnahmeparameters an das Prüfobjekt ist es möglich, Zeit einzusparen und Komponenten der CT-Anlage zu schonen, indem beispielsweise nicht mehr Messzeit oder keine höhere Intensität als für das Prüfobjekt nötig verwendet wird. Außerdem kann das Ergebnis der Aufnahme von Röntgendaten mittels der CT-Anlage schon ab der ersten Aufnahme verbessert werden, wodurch Wiederholungsmessungen vermieden werden können und somit Zeit eingespart werden kann. Gegenüber einer Parametrisierungsmessung des Prüfobjekts mittels der CT-Anlage selber, bietet die Vorrichtung den Vorteil, dass auch von Röntgendaten verschiedene Messdaten über das Prüfobjekt, beispielsweise eine Objektform zusätzlich zu einer Masse, in das Bestimmen des mindestens einen Aufnahmeparameters einfließen können. Dadurch wird die Vielfalt der Informationen über das Prüfobjekt erhöht, wodurch die Qualität der Vorhersage des mindestens einen Aufnahmeparameters gesteigert wird. Außerdem kann die Vorrichtung die Messdaten im Vergleich zu einer CT-Anlage besonders schnell bereitstellen. Durch ein Kombinieren der Messdaten der Messvorrichtung mit einem Vorhersagemodell durch den Datenanalysator, kann die Qualität des Bereitstellens der ein oder mehreren Aufnahmeparameter zusätzlich verbessert werden, indem ein Vorwissen des Vorhersagemodells eine Anpassung des mindestens einen Aufnahmeparameters an das Prüfobjekt ermöglicht. Dadurch muss ein Aufnahmeparameter nicht von einem Benutzer basierend auf dessen Erfahrung gewählt werden, sondern kann basierend auf dem Vorwissen des Vorhersagemodells gewählt werden. Die Vorrichtung bietet somit eine anwendungsübergreifende Möglichkeit zur Bestimmung von Aufnahmeparametern, da der Datenanalysator aufgrund des Vorhersagemodells in der Lage sein kann, Aufnahmeparameter für verschiedene Anwendungen bereitzustellen. Aufgrund der Verwendung des Vorhersagemodells ist die Wahl der Aufnahmeparameter des Datenanalysators ferner sowohl benutzerübergreifend als auch für verschiedene CT-Anlage anwendbar. Dadurch kann sowohl die Qualität der Aufnahme von Röntgendaten gesteigert werden, als auch die Vergleichbarkeit zwischen von unterschiedlichen Benutzern aufgenommenen Röntgendaten und/oder an verschiedenen CT-Anlagen aufgenommenen Röntgendaten. Die erfindungsgemäße Vorrichtung ist somit in der Lage, die Phase vor Beginn der CT-Messung zu verkürzen und zu optimieren, eine Vergleichbarkeit von CT-Dienstleistungsmessungen herzustellen, die Auslastung von Dienstleistungssystemen durch Vermeidung langer Rüstzeiten und häufiger Wiederholungsmessungen zu optimieren, sowie eine langwierige Einarbeitung neuer Mitarbeiter in die komplexe Materie der Computertomographie zu vermeiden. Somit ist die erfindungsgemäße Vorrichtung in der Lage, den Durchsatz und die Qualität der von der CT-Anlage gelieferten Ergebnisse zu steigern.

Ausführungsformen und weitere vorteilhafte Aspekte dieser Vorrichtung sind in den jeweils abhängigen Patentansprüchen genannt.

Erfindungsgemäß verwendet der Datenanalysator zum Bereitstellen des Aufnahmeparameters für die Computertomographieanlage ferner eine Röntgenprojektion des Prüfobjekts.

Die zusätzliche Verwendung einer Röntgenprojektion des Prüfobjekts erhöht die Vielfalt an Informationen über das Prüfobjekt, wodurch die Qualität des Bereitstellens des mindestens einen Aufnahmeparameters erhöht werden kann. Durch das Kombinieren der Messdaten der Messvorrichtung mit der Röntgenprojektion des Prüfobjekts können ferner zusätzliche Informationen über das Prüfobjekt generiert werden. Beispielsweise kann durch das Kombinieren einer (mittleren) physikalischen Dichte des Prüfobjekts mit einer Röntgenprojektion des Prüfobjekts eine Dichteverteilung des Prüfobjekts generiert werden. Die Kenntnis der Dichteverteilung des Prüfobjekts ist vorteilhaft zum Bestimmen eines Aufnahmeparameters, beispielsweise einer Belichtungszeit oder einer Projektionszahl.

Gemäß einem weiteren Ausführungsbeispiel kann der Datenanalysator zum Bereitstellen des Aufnahmeparameters für die Computertomographieanlage ferner eine Definition einer Prüfaufgabe verwenden. Die Prüfaufgabe kann beispielsweise ein Finden von Defekten oder ein Soll-Ist-Vergleich einer Objektform des Prüfobjekts sein. Das Verwenden der Definition einer Prüfaufgabe zum Bestimmen des mindestens einen Aufnahmeparameters bietet den Vorteil, dass ein Aufnahmeparameter auf die Prüfaufgabe angepasst werden kann, das heißt, dass der Aufnahmeparameter prüfaufgabenspezifisch sein kann. Je nach Prüfaufgabe können ein oder mehrere Aufnahmeparameter hinsichtlich prüfaufgabenspezifischer Aufgaben optimiert werden. Dadurch kann beispielsweise ein guter Kompromiss aus Messzeit und erforderlicher Bildqualität erreicht werden. Dies ist wiederum vorteilhaft für die Durchsatzsteigerung der CT-Anlage und zur Schonung von Komponenten.

Gemäß einem weiteren Ausführungsbeispiel kann die Vorrichtung ausgestaltet sein, um unabhängig vom Betrieb der Computertomographieanlage betrieben zu werden, um beispielsweise einen Aufnahmeparameter für die Computertomographieanlage bereitzustellen. Das kann z. B. bedeuten, dass die Vorrichtung parallel zu der Computertomographieanlage betrieben werden kann, beispielsweise gleichzeitig oder ein Prüfobjekt verschieden von einem zeitgleich von der Computertomographieanlage geprüften Prüfobjekt prüfend. Die Vorrichtung oder die Messvorrichtung kann beispielsweise ohne Hardwareanbindung an die Computertomographieanlage betrieben werden. Beispielsweise kann die Vorrichtung oder die Messvorrichtung derart ausgelegt sein, dass sie räumlich getrennt von der Computertomographieanlage betrieben werden kann. Das ermöglicht einen unabhängigen Betrieb der Vorrichtung von einem Betrieb der Computertomographieanlage, wodurch die Zeit zur Bestimmung eines Aufnahmeparameters für ein Prüfobjekt parallel dazu benutzt werden kann, um Röntgendaten eines zweiten Prüfobjekts mittels der Computertomographieanlage aufzunehmen. Durch diese Parallelisierung kann Zeit eingespart werden und der Durchsatz der Computertomographieanlage, d.h. die Zahl der mittels der CT-Anlage geprüften Prüfobjekte, gesteigert werden. Dadurch, dass die Vorrichtung derart ausgestaltet ist, dass sie von der CT-Anlage unabhängig ist, kann sie außerdem für eine beliebige CT-Anlage von einem beliebigen Hersteller benutzt werden, da die Vorrichtung nicht darauf angewiesen ist, dass die Eigenschaften der Computertomographieanlage einen Betrieb mit der Vorrichtung erlauben. Beispielsweise kann die Vorrichtung betrieben werden, unabhängig davon, ob eine Hardwareschnittstelle zu der Computertomographieanlage offenliegt. Durch die Verwendung der Vorrichtung für verschiedene CT-Anlagen kann beispielsweise die Vergleichbarkeit von CT-Aufnahmen, die mittels der verschiedenen CT-Anlage aufgenommen wurden, weiter erhöht werden.

Erfindungsgemäß ist die Vorrichtung ausgestaltet**,** um unter Verwendung einer physikalischen Dichte des Prüfobjekts einen Aufnahmeparameter für eine Röntgenprojektion und/oder den mindestens einen Aufnahmeparameter für die Computertomographieanlage zu erhalten. Die physikalische Dichte ist eine mittlere physikalische Dichte, beispielsweise ein Quotient aus Masse und Volumen des Prüfobjekts. Die physikalische Dichte des Prüfobjekts kann vorteilhaft zum Bestimmen eines für das Prüfobjekt geeigneten Röntgenspektrums verwendet werden. Durch die Verwendung der physikalischen Dichte des Prüfobjekts für das Bestimmen eines Aufnahmeparameters, beispielsweise eines Röntgenspektrums, kann der Aufnahmeparameter besonders gut an das Prüfobjekt angepasst werden. Beispielsweise kann ein Röntgenspektrum so gewählt werden, dass eine gute Durchdringung des Prüfobjekts durch die Röntgenstrahlung sichergestellt ist.

Gemäß einem weiteren Ausführungsbeispiel können die Messdaten der Messvorrichtung die physikalische Dichte des Prüfobjekts und/oder die Objektform des Prüfobjekts und/oder eine Masse des Prüfobjekts beinhalten. Die Kombination aus der Masse des Prüfobjekts und der Objektform des Prüfobjekts eignet sich besonders gut zur genauen Bestimmung der physikalischen Dichte des Prüfobjekts. Die Kombination der Masse des Prüfobjekts und der Objektform des Prüfobjekts, das heißt beispielsweise die Auswertung dieser Messdaten, kann in der Messvorrichtung erfolgen, so dass die von der Messvorrichtung bereitgestellten Messdaten die physikalische Dichte des Prüfobjekts enthalten.

Gemäß einem weiteren Ausführungsbeispiel kann die Messvorrichtung einen Sensor zur Ermittlung einer Masse, beispielsweise eine Waage, einen Beschleunigungssensor oder einen Kraftsensor, aufweisen, um die Masse des Prüfobjekts zu bestimmen. Alternativ oder zusätzlich kann die Messvorrichtung einen stereoskopischen Sensor aufweisen, um die Objektform des Prüfobjekts zu bestimmen. Alternativ oder zusätzlich kann die Messvorrichtung ausgestaltet sein, um basierend auf der Masse und der Objektform des Prüfobjekts die physikalische Dichte des Prüfobjekts zu ermitteln. Ein stereoskopischer Sensor kann beispielsweise ein bildgebender Sensor sein, der ein dreidimensionales Abbild des Prüfobjekts bestimmen kann. Die Objektform des Prüfobjekts kann beispielsweise eine konvexe Hülle des Prüfobjekts oder eine räumlichen Ausdehnung des Prüfobjekts sein. Eine Ausgestaltung der Messvorrichtung gemäß diesem Ausführungsbeispiel bietet einen besonders vorteilhaften Kompromiss aus Geschwindigkeit, Aufwand und Genauigkeit zum Bereitstellen der physikalischen Dichte des Prüfobjekts.

Gemäß einem weiteren Ausführungsbeispiel kann die Vorrichtung ausgestaltet sein, um basierend auf der physikalischen Dichte des Prüfobjekts einen Parameter betreffend ein Röntgenspektrum, beispielsweise eine Röntgenenergie oder eine spektrale Breite oder einen physikalischen Vorfilter oder eine Spannung einer Röntgenröhre, zu ermitteln. Die physikalische Dichte des Prüfobjekts stellt einen geeigneten Parameter dar, um das für eine Röntgenprojektion oder für die Aufnahme der Röntgendaten des Prüfobjekts mittels der Computertomographieanlage benutzte Röntgenspektrum an das Prüfobjekt anzupassen. Durch diese Anpassung kann beispielsweise ein guter Kompromiss gefunden werden, bei dem das Prüfobjekt ausreichend gut durchleuchtet werden kann und gleichzeitig Hardwarekomponenten, beispielsweise der Röntgendetektor und die Röntgenröhre, geschont werden können. Dies erhöht die Lebenszeit der entsprechenden Komponenten der Computertomographieanlage.

Gemäß einem weiteren Ausführungsbeispiel kann die Vorrichtung ausgestaltet sein, um unter Verwendung der Objektform des Prüfobjekts einen Abbildungsmaßstab für die Computertomographieanlage und/oder für eine Röntgenprojektion zu bestimmen. Durch eine Anpassung des Abbildungsmaßstabs an die Objektform des Prüfobjekts kann eine gute Bildqualität der Röntgendaten des Prüfobjekts gewährleistet werden, bei gleichzeitiger Schonung von Komponenten der Computertomographieanlage, beispielsweise dem Röntgendetektor.

Gemäß einem weiteren Ausführungsbeispiel kann die Vorrichtung ausgestaltet sein, um unter Verwendung der physikalischen Dichte und der Röntgenprojektion eine Dichteverteilung des Prüfobjekts zu bestimmen und um unter Verwendung der Dichteverteilung des Prüfobjekts einen Aufnahmeparameter, beispielsweise eine Belichtungszeit oder eine Projektionszahl, für die Computertomographieanlage bereitzustellen. Durch die Kombination der physikalischen Dichte des Prüfobjekts und der Röntgenprojektion kann die Dichteverteilung des Prüfobjekts sehr genau bestimmt werden. Genaue Informationen über die Dichteverteilung des Prüfobjekts wiederum lassen eine sehr gute Vorhersage der Aufnahmeparameter für die Computertomographieanlage zu, beispielsweise hinsichtlich einer Belichtungszeit oder einer Projektionszahl, so dass eine gute Bildqualität der Röntgendaten des Prüfobjekts erreicht werden kann und gleichzeitig Messzeit und Ressourcen gespart werden können.

Gemäß einem weiteren Ausführungsbeispiel kann die Messvorrichtung einen Röntgenfluoreszenzsensor aufweisen. Alternativ oder zusätzlich kann die Vorrichtung ausgestaltet sein, um unter Verwendung von Daten des Röntgenfluoreszenzsensors einen Aufnahmeparameter für die Computertomographieanlage bereitzustellen. Der Einsatz eines Röntgenfluoreszenzsensors (XRF) kann Aufschluss über eine Materialzusammensetzung des Prüfobjekts geben, woraus zusätzliche Informationen für das Röntgenspektrum, bzw. das zu wählende Röntgenspektrum gewonnen werden können. Durch eine noch genauere Bestimmung des Röntgenspektrums kann die Wahl der Aufnahmeparameter noch weiter optimiert werden.

Gemäß einem weiteren Ausführungsbeispiel kann die Vorrichtung ausgestaltet sein, um unter Verwendung der Objektform des Prüfobjekts und/oder der Definition einer Prüfaufgabe einen Aufnahmeparameter betreffend ein Achssystem der Computertomographieanlage zu erhalten. Ein Achssystem, beispielsweise ein PolyCT, kann beispielsweise eine Vorrichtung sein, die es ermöglicht, Röntgendaten von mehreren Prüfobjekten gleichzeitig mit einer CT-Anlage aufzunehmen, beispielsweise indem sie mehrere Drehzentren aufweist. Die Kombination der Messdaten mit dem Vorhersagemodell und der Verwendung eines Poly-CT als zusätzlichem Aufnahmeparameter zur Durchsatzsteigerung ermöglicht es, den Einsatz eines solchen Achssystems unter Vermeidung einer Durchführung zeitaufwändiger Testscans und/oder Wiederholungsmessungen zu optimieren, und zwar aufgabenübergreifend und nicht nur spezifisch für genau eine Fragestellung. Beispielsweise lässt sich eine optimale Winkelauflösung wählen und somit eine Durchsatzsteigerung der Computertomographieanlage erreichen, während die Bildqualität einer Prüfaufgabe entsprechend gewährleistet bleibt.

Erfindungsgemäß weist das Vorhersagemodell ein selbstlernendes algorithmisches Verfahren auf, beispielsweise ein Verfahren mit Methoden des maschinellen Lernens. Beispielsweise kann das Vorhersagemodell mit Hilfe von Methoden des maschinellen Lernens generiert werden, welche mit Datensätzen unterschiedlicher Prüfszenarien und Prüfobjekte antrainiert sind. Das Vorhersagemodell beinhaltet beispielsweise eine Vielzahl von Datensätzen, wobei jeder Datensatz eine oder mehrere Informationen über ein Prüfobjekt und/oder Informationen über Röntgendaten des Prüfobjekts und/oder Informationen über das Zustandekommen der Röntgendaten über das Prüfobjekt enthält. Die Verwendung von einem selbstlernenden algorithmischen Verfahren bietet den Vorteil, dass Ergebnisse von vorherigen Aufnahmen von Röntgendaten über Prüfobjekte verwendet werden können, um das Bestimmen des mindestens einen Aufnahmeparameters für die Computertomographieanlage zu verbessern. Beispielsweise können zum Bestimmen des mindestens einen Aufnahmeparameters Informationen über Röntgendaten kombiniert werden, die von einer Vielzahl verschiedener Prüfobjekte stammen, mittels einer Vielzahl verschiedener CT-Anlagen aufgenommen wurden und/oder von einer Vielzahl verschiedener Benutzer aufgenommen wurden. Die Vorrichtung setzt also die Möglichkeiten der maschinellen Lernfähigkeit ein, um die Phase vor Beginn der CT-Messung zu verkürzen und zu optimieren. Durch die Verwendung des selbstlernenden Algorithmus, weist die Vorrichtung bzw. das CT-System außerdem eine Lernfähigkeit bezogen auf die Aufnahmeparameter für wohlbekannte Fragestellungen auf.

Erfindungsgemäß basiert das Vorhersagemodell auf einer Vielzahl von Datensätzen, wobei jeder Datensatz mindestens eine der folgenden Informationen aufweist: eine Prüfaufgabe, die Objektform des Prüfobjekts, die Dichteverteilung eines Prüfobjekts, die physikalische Dichte eines Prüfobjekts, die Masse eines Prüfobjekts, eine Röntgenprojektion eines Prüfobjekts, einen CT-Volumendatensatz eines Prüfobjekts, mindestens einen Aufnahmeparameter einer Röntgenprojektion und/oder eines CT-Volumendatensatzes, ein oder mehrere Statusinformationen betreffend die Computertomographieanlage, ein oder mehrere Messdaten über ein Prüfobjekt, ein oder mehrere Röntgendaten über ein Prüfobjekt, eine Information über die Bildqualität von Röntgendaten zu einem Prüfobjekt. Durch ein Auswerten einer oder mehrerer dieser Informationen der Vielzahl von Datensätzen ist das Vorhersagemodell in der Lage, den mindestens einen Aufnahmeparameter für die Computertomographieanlage dem Prüfobjekt oder der Prüfaufgabe und/oder der Computertomographieanlage und/oder einer weiteren Rahmenbedingung, beispielsweise einem Zustand der Computertomographieanlage, anzupassen. Die Verwendung eines selbstlernenden Algorithmus bietet den Vorteil, dass sich das Bestimmen des mindestens einen Aufnahmeparameters aus der Auswertung vorheriger Datensätze ergibt, und nicht vom jeweiligen Benutzer abhängig ist. Dies verbessert eine Vergleichbarkeit von durch verschiedene Nutzer aufgenommenen CT-Daten. Des Weiteren ist das Vorhersagemodell durch den selbstlernenden Algorithmus in der Lage, eine besonders gute Vergleichbarkeit zwischen verschiedenen Computertomographieanlagen herzustellen. Eine Verwendung eines selbstlernenden Algorithmus schafft eine Lernfähigkeit des CT-Systems bzw. der erfindungsgemäßen Vorrichtung bezogen auf die Aufnahmeparameter für wohlbekannte Fragestellungen, z.B. Prüfaufgaben.

Gemäß einem weiteren Ausführungsbeispiel kann der Datenanalysator ausgestaltet sein, um unter Verwendung einer mittels der Computertomographieanlage erstellten Röntgenprojektion des Prüfobjekts und unter Verwendung des Vorhersagemodells eine Wartungsempfehlung für die Computertomographieanlage bereitzustellen, wobei das Vorhersagemodell ein selbstlernendes algorithmisches Verfahren aufweisen kann und wobei das Vorhersagemodell auf Informationen einer Vielzahl von vorab mittels der Computertomographieanlage erstellten Röntgenprojektionen von dem Prüfobjekt und/oder von weiteren Prüfobjekten basieren kann. Die Wartungsempfehlung kann beispielsweise Kalibrierungsaspekte von einem der CT-Anlage zugehörigen Detektor und/oder einem Achssystem, oder Aspekte der prädikativen Wartung, beispielsweise betreffend die Röntgenröhre, beinhalten. Eine Analyse eines Wartungszustands der Computertomographieanlage mittels des Vorhersagemodells bietet den Vorteil, dass der Zustand der Computertomographieanlage in das Bestimmen des mindestens einen Aufnahmeparameters für die Computertomographieanlage einfließen kann. Das Bereitstellen einer Wartungsempfehlung unter Verwendung des Vorhersagemodells und unter Verwendung der Röntgenprojektion des Prüfobjekts ermächtigt die erfindungsgemäße Vorrichtung, situativ individuell erforderliche Wartungsschritte zu erkennen und dem Defekt von Röntgenkomponenten vorzubeugen. Die Verwendung einer Röntgenprojektion eines Prüfobjekts für die Bereitstellung der Wartungsempfehlung vermeidet ferner das Aufnehmen von zusätzlichen Röntgenprojektionen zu Prüf- oder Kalibrierungszwecken. Unnötige Standzeiten durch verfrühte oder übertriebene Wartungsmaßnahmen oder kostspielige Serviceeinsätze werden dadurch vermieden.

Gemäß einem weiteren Ausführungsbeispiel kann der Datenanalysator unter Verwendung der mittels der Computertomographieanlage erstellten Röntgenprojektion des Prüfobjekts eine Information über eine Bildqualität ermitteln, beispielsweise eine Homogenität der Röntgenprojektion oder eine Anzahl defekter Pixel, der mittels der Computertomographieanlage erstellten Röntgenprojektion. Alternativ oder zusätzlich kann der Datenanalysator unter Verwendung der Information über eine Bildqualität der mittels der Computertomographieanlage erstellten Röntgenprojektion eine Information über einen aktuellen Wartungszustand der Computertomographieanlage ermitteln, beispielsweise eine Anzahl defekter Pixel eines Röntgendetektors. Ein defektes Pixel kann beispielsweise ein Pixel mit zum Normalzustand verringerter oder keiner Dynamik sein. Eine Degradation des Röntgendetektors kann sich in einer erhöhten Anzahl defekter Pixel, also Pixeln, die eine im Vergleich zum Normalbetrieb verringerte Dynamik aufweisen oder auch gar keine Bildinformation mehr tragen, äußern. Es ist z.B. möglich, dass bei der Ermittlung einer Wartungsempfehlung defekte Bildpunkte bzw. Pixel erkannt werden. Diese können ausmaskiert werden, oder entweder durch Wartung bzw. durch die Anwendung eines Median-Filters in der Bildaufnahme kompensiert werden, wobei es sich hierbei um einen Aufnahmeparameter handelt. Die Sensitivität und das Grundrauschen des Detektors können sich insgesamt verändern, was die Aufnahme neuer Abgleichbilder, beispielsweise für einen "Gain" oder einen "Offset", erforderlich machen kann, um Röntgendaten oder Röntgenprojektionen mit möglichst wenig durch den Detektor induzierten Störeinflüssen zu erhalten. Ein Achssystem kann sich durch häufige Verwendung und mechanische oder thermische Belastung dejustieren, sodass die angenommene von der realen Aufnahmegeometrie abweicht und im rekonstruierten Volumen Artefakte entstehen. Eine Information über einen aktuellen Wartungszustand der Computertomographieanlage kann beispielsweise auch eine Sensitivität eines Röntgendetektors oder ein Grundrauschen eines Röntgendetektors oder eine Achssystem-Kalibrierung sein. Alternativ oder zusätzlich kann die Vorrichtung unter Verwendung der Informationen über den aktuellen Wartungszustand der Computertomographieanlage die Wartungsempfehlung für die Computertomographieanlage bereitstellen. Die Verwendung der Bildqualität der Röntgenprojektion eines Prüfobjekts zum Bereitstellen der Wartungsempfehlung bietet den Vorteil, dass eine Wartungsempfehlung im laufenden Betrieb der Computertomographieanlage bereitgestellt werden kann und in Reaktion auf Röntgendaten von geprüften Prüfobjekten.

In Anlehnung an die oben beschriebenen Ausführungsbeispiele betrifft ein weiteres Ausführungsbeispiel der vorliegenden Erfindung eine entsprechende Vorrichtung zum Bereitstellen einer Wartungsempfehlung für eine Computertomographieanlage, wobei die Vorrichtung einen Datenanalysator aufweist, der unter Verwendung einer mittels der Computertomographieanlage erstellten Röntgenprojektion eines Prüfobjekts, und unter Verwendung eines Vorhersagemodells die Wartungsempfehlung für die Computertomographieanlage bereitstellt. Dabei weist das Vorhersagemodell ein selbstlernendes algorithmisches Verfahren auf. Ferner basiert das Vorhersagemodell auf Informationen einer Vielzahl von vorab mittels der Computertomographieanlage und/oder anderen Computertomographieanlagen erstellten Röntgenprojektionen von dem Prüfobjekt und/oder von weiteren Prüfobjekten. Die Verwendung einer mittels der Computertomographieanlage erstellten Röntgenprojektion eines Prüfobjekts für das Bereitstellen einer Wartungsempfehlung für die Computertomographieanlage ermöglicht es, Wartungsempfehlungen für die Computertomographieanlage vorherzusagen, ohne gesondert Prüfdaten für die Computertomographieanlage aufzunehmen. Stattdessen werden Daten verwendet, die zum Prüfen eines Prüfobjekts aufgenommen werden. Dadurch kann die Verfügbarkeit der Computertomographieanlage für das Prüfen von Prüfobjekten erhöht werden. Außerdem kann durch die Bereitstellung von Wartungsempfehlungen für die Computertomographieanlage unter Verwendung der mittels der Computertomographieanlage erstellten Röntgenprojektion ein Wartungsbedarf rechtzeitig erkannt werden. Damit ist eine rechtzeitige Durchführung von Wartungsmaßnahmen möglich, was eine pflegende Wirkung auf Komponenten der Computertomographieanlage, beispielsweise eine Röntgenröhre oder ein Achssystem, hat und die Lebensdauer der Komponenten verlängert. Anstatt auf das subjektive Erfahrungswissen eines Benutzers zurückgreifen zu müssen, bietet die erfindungsgemäße Vorrichtung objektive Hinweise auf eine nötige Wartung der Röntgenkomponenten. d.h. wann Wartungsmaßnahmen erforderlich sind. Rechtzeitige Wartungen vermeiden daher kostspielige Reparaturen und in der Folge unnötige Standzeiten. Die erfindungsgemäße Vorrichtung ist in der Lage, situativ individuell erforderliche Wartungsschritte zu erkennen und dem Defekt von Röntgenkomponenten vorzubeugen. Unnötige Standzeiten durch verfrühte oder übertriebene Wartungsmaßnahmen oder kostspielige Serviceeinsätze werden vermieden. Somit ist die erfindungsgemäße Vorrichtung in der Lage, kostspielige Reparaturen und unnötige Standzeiten durch versäumte oder übertriebene Wartung der Röntgenkomponenten zu vermeiden und somit den Durchsatz und die Qualität der von der CT-Anlage gelieferten Ergebnisse zu steigern.

Gemäß einem weiteren Ausführungsbeispiel, kann die Vorrichtung zum Bereitstellen einer Wartungsempfehlung für eine Computertomographieanlage so ausgestaltet sein, dass der Datenanalysator unter Verwendung der mittels der Computertomographieanlage erstellten Röntgenprojektion des Prüfobjekts eine Information über eine Bildqualität der mittels der Computertomographieanlage erstellten Röntgenprojektion erhält, und der Datenanalysator unter Verwendung der Information über eine Bildqualität der mittels der Computertomographieanlage erstellten Röntgenprojektion eine Information über einen aktuellen Wartungszustand der Computertomographieanlage erhält, und die Vorrichtung unter Verwendung der Information über den aktuellen Wartungszustand der Computertomographieanlage die Wartungsempfehlung für die Computertomographieanlage bereitstellt.

Ein weiteres Ausführungsbeispiel betrifft eine Computertomographieanlage mit einer oben beschriebenen Vorrichtung zum Bestimmen von mindestens einem Aufnahmeparameter zur Aufnahme von Röntgendaten eines Prüfobjekts mittels einer Computertomographieanlage, und/oder mit einer oben beschriebenen Vorrichtung zum Bereitstellen einer Wartungsempfehlung für eine Computertomographieanlage.

Die entsprechende Computertomographieanlage basiert auf denselben Überlegungen wie die oben erläuterten Vorrichtungen. Ferner sei darauf hingewiesen, dass die Computertomographieanlage um alle Merkmale, Funktionen und Details ergänzt werden kann, die hierin im Hinblick auf die erfindungsgemäße Vorrichtung beschrieben sind. Die Computertomographieanlage kann um die genannten Merkmale, Funktionalitäten und Details sowohl einzeln als auch in Kombination ergänzt werden.

Erfindungsgemäß wird ein entsprechendes Verfahren zum Bestimmen von mindestens einem Aufnahmeparameter zum Aufnehmen von Röntgendaten eines Prüfobjekts mittels einer Computertomographieanlage gemäß dem Anspruch 13 definiert.

Ein weiteres Ausführungsbeispiel der vorliegenden Erfindung betrifft ein entsprechendes Verfahren zum Bereitstellen einer Wartungsempfehlung für eine Computertomographieanlage, wobei das Verfahren die folgenden Schritte aufweist: Erhalten einer mittels der Computertomographieanlage erstellten Röntgenprojektion eines Prüfobjekts und Bereitstellen der Wartungsempfehlung für die Computertomographieanlage unter Verwendung der Röntgenprojektion des Prüfobjekts und unter Verwendung eines Vorhersagemodells basierend auf einer Bildqualität der Röntgenprojektion des Prüfobjekts, wobei das Vorhersagemodell ein selbstlernendes algorithmisches Verfahren aufweist und wobei das Vorhersagemodell auf Informationen einer Vielzahl von vorab mittels der Computertomographieanlage und/oder anderen Computertomographieanlagen erstellten Röntgenprojektionen von dem Prüfobjekt und/oder von weiteren Prüfobjekten basiert.

Ein weiteres Ausführungsbeispiel betrifft ein Computerprogramm mit einem Programmcode zur Durchführung mindestens eines der genannten Verfahren, wenn das Programm auf einem Computer abläuft.

Einige nicht-limitierende Ausführungsbeispiele sind exemplarisch in der Zeichnung dargestellt und werden nachstehend erläutert. Es zeigen:
- Fig. 1: eine schematische Darstellung einer Vorrichtung zum Bestimmen eines Aufnahmeparameters für eine Computertomographieanlage gemäß einem Ausführungsbeispiel,
- Fig. 2: eine schematische Darstellung einer Vorrichtung zum Bestimmen eines.Aufnahmeparameters für eine Computertomographieanlage gemäß einem weiteren Ausführungsbeispiel,
- Fig. 3: eine schematische Darstellung einer Vorrichtung zum Bereitstellen einer Wartungsempfehlung für eine Computertomographieanlage gemäß einem Ausführungsbeispiel,
- Fig. 4A: eine schematische Darstellung einer Computertomographieanlage mit einer Vorrichtung zum Bestimmen von mindestens einem Aufnahmeparameter zur Aufnahme von Röntgendaten eines Prüfobjekts mittels der Computertomographieanlage gemäß einem Ausführungsbeispiel,
- Fig. 4B: eine schematische Darstellung einer Computertomographieanlage mit einer Vorrichtung zum Bereitstellen einer Wartungsempfehlung für die Computertomographieanlage gemäß einem Ausführungsbeispiel,
- Fig. 5: ein Blockdiagramm eines Verfahrens zum Bestimmen eines Aufnahmeparameters für eine Computertomographieanlage gemäß einem Ausführungsbeispiel, und
- Fig. 6: ein Blockdiagramm eines Verfahrens zum Bereitstellen einer Wartungsempfehlung für eine Computertomographieanlage gemäß einem Ausführungsbeispiel.

### Detaillierte Beschreibung der Erfindung

Nachfolgend werden Ausführungsbeispiele mit Bezug auf die Figuren näher beschrieben, wobei Elemente mit derselben oder ähnlichen Funktion mit denselben Bezugszeichen versehen sind. Elemente, die mit gestrichelten Linien dargestellt sind, sind entweder optionale Elemente oder Elemente, die nicht Teil der Erfindung sind, aber zum besseren Verständnis der Erfindung in der Zeichnung dargestellt sind.

Verfahrensschritte, die in einem Blockdiagramm dargestellt und mit Bezugnahme auf das selbige erläutert werden, können auch in einer anderen als der abgebildeten beziehungsweise beschriebenen Reihenfolge ausgeführt werden. Außerdem sind Verfahrensschritte, die ein bestimmtes Merkmal einer Vorrichtung betreffen mit ebendiesem Merkmal der Vorrichtung austauschbar, was ebenso anders herum gilt.

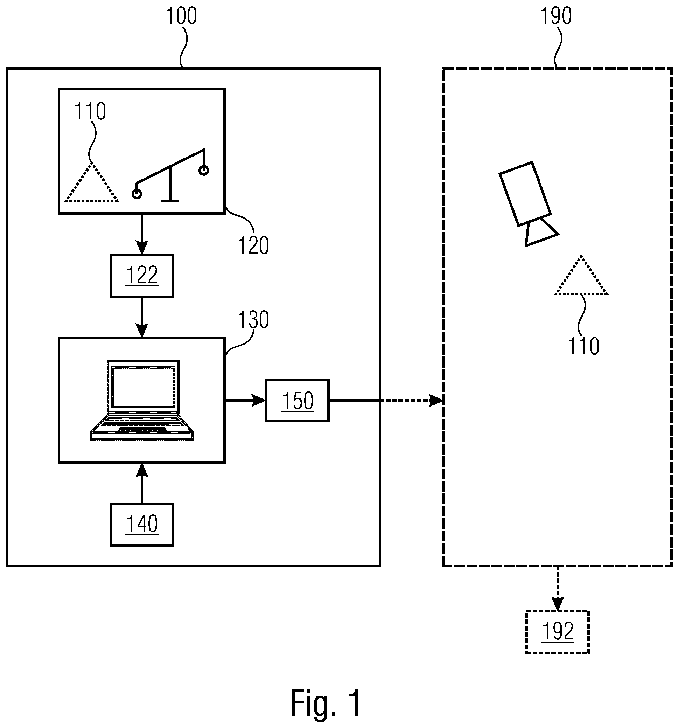

Figur 1 zeigt eine schematische Darstellung eines Ausführungsbeispiels einer Vorrichtung 100 zum Bestimmen von mindestens einem Aufnahmeparameter 150 zum Aufnehmen von Röntgendaten 192 eines Prüfobjekts 110 mittels einer Computertomographieanlage 190. Die Vorrichtung 100 weist eine Messvorrichtung 120 auf, die ausgestaltet ist, um Messdaten 122 über das Prüfobjekt 110 bereitzustellen. Die Vorrichtung 100 weist ferner einen Datenanalysator 130 auf. Der Datenanalysator 130 stellt unter Verwendung der Messdaten 122 der Messvorrichtung 120 und unter Verwendung eines Vorhersagemodells 140 den mindestens einen Aufnahmeparameter 150 für die Computertomographieanlage 190 bereit.

Die in Fig. 1 gezeigte Anordnung der Vorrichtung 100 in Bezug auf die CT-Anlage 190 ist schematisch zu verstehen, d.h. die Vorrichtung 100 kann räumlich getrennt oder neben oder innerhalb der CT-Anlage 190 angeordnet sein oder in die CT-Anlage 190 integriert sein. Ebenso können Teile der Vorrichtung 100, beispielsweise die Messvorrichtung 120 und/oder der Datenanalysator 130 räumlich getrennt oder neben oder innerhalb der CT-Anlage 190 angeordnet sein oder in die CT-Anlage 190 integriert sein. Möglicherweise können auch Komponenten von der Vorrichtung 100 und der CT-Anlage 190 gemeinsam genutzt werden.

Bei dem Prüfobjekt 110 handelt es sich beispielsweise um ein Werkstück, dessen fehlerfreie Herstellung überprüft werden kann. Das Vorhersagemodell 140 kann beispielsweise ein neuronales Netz aufweisen.

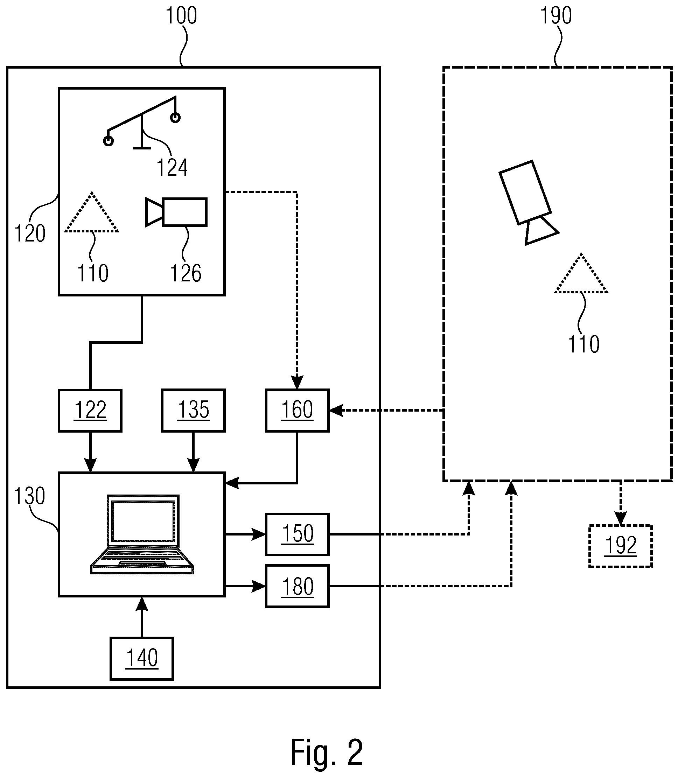

Figur 2 zeigt eine schematische Darstellung eines weiteren Ausführungsbeispiels der in Fig. 1 gezeigten Vorrichtung 100 zum Bestimmen von mindestens einem Aufnahmeparameter 150 zur Aufnahme von Röntgendaten 192 eines Prüfobjekts 110 mittels einer Computertomographieanlage 190.

Ein Aufnahmeparameter 150 zur Aufnahme der Röntgendaten 192 kann beispielsweise ein Röntgenspektrum, d.h. eine spektrale Verteilung der zur Aufnahme der Röntgendaten 192 verwendeten Röntgenstrahlen, sein, oder ein Parameter, der das Röntgenspektrum beeinflusst, beispielsweise, eine Röntgenspannung (eine Spannung für eine Röntgenröhre) oder eine physikalische Vorfilterung, d.h. eine spektrale Filterung des Röntgenlichts. Ein Aufnahmeparameter 150 kann eine Belichtung für die Aufnahme betreffen. Ein Aufnahmeparameter 150 kann ein Strom-Zeit-Produkt oder eine Intensität sein. Ein Aufnahmeparameter 150 kann eine Projektionszahl, eine Ortsauflösung der Gesamtabbildung oder ein Abbildungsmaßstab sein. Ein Aufnahmeparameter 150 kann auch ein Messmodus sein, d.h. eine Brennfleckgröße, die beispielsweise die Intensität und die Ortsauflösung der Gesamtabbildung beeinflussen kann. Ein Aufnahmeparameter 150 kann auch ein Achssystem, beispielsweise ein PolyCT-System betreffen, beispielsweise kann ein Aufnahmeparameter 150 einen Vorschlag zur Benutzung eines Achssystems und/oder einen Parameter für ein Achssystem, beispielsweise einen Winkel sein.

Der Datenanalysator 130 kann beispielsweise ein Computer sein. Der Datenanalysator 130 kann mit der Messvorrichtung 120 zum Zweck einer elektronischen Datenübertragung verbunden sein. Der Datenanalysator 130 kann auch mit der Computertomographieanlage 190 zum Zweck einer elektronischen Datenübertragung verbunden sein.

Der Datenanalysator 130 verwendet zum Bereitstellen des mindestens einen Aufnahmeparameters 150 für die Computertomographieanlage 190 eine Röntgenprojektion 160 des Prüfobjekts 110.

Eine Röntgenprojektion 160 des Prüfobjekts 110 kann beispielsweise eine Durchleuchtung des Prüfobjekts 110 oder ein zweidimensionales Röntgenbild des Prüfobjekts 110 beinhalten.

Der Datenanalysator 130 kann die Röntgenprojektion 160 beispielsweise direkt aus dem Röntgendetektor oder manuell durch den Bediener oder durch einen "Watchdog"-Mechanismus erhalten. Durch verschiedene Eingabemöglichkeiten für die Röntgenprojektion kann die herstellerunabhängige Einsetzbarkeit der Vorrichtung 100 gewährleistet werden. Der Datenanalysator 130 kann zum Bereitstellen des mindestens einen Aufnahmeparameters 150 für die Computertomographieanlage 190 eine Definition einer Prüfaufgabe 135 verwenden. D.h. der Datenanalysator 130 kann mittels der Messdaten 122, beispielsweise multimodalen Messdaten, der Röntgenprojektion 160 und des Vorhersagemodells 130 über den mindestens einen Aufnahmeparameter 150 zur Aufnahme der Röntgendaten 192 für das Prüfobjekt 110 spezifisch für die vorher definierte Prüfaufgabe 135 entscheiden. Die Prüfaufgabe 135 kann beispielsweise von einem Benutzer definiert werden oder aus einer Auswahl von Prüfaufgaben oder Prüfszenearien ausgewählt werden. Die Prüfaufgabe 135 kann beispielsweise ein Finden von Defekten oder ein Soll-Ist-Vergleich der Objektform sein. Eine Prüfaufgabe 135 kann eine Aufgabe sein, aus der sich Kriterien für die Aufnahme der Röntgendaten 192 (beispielsweise eine Messzeit) oder die aufzunehmenden Röntgendaten 192 (beispielsweise eine Ortsauflösung) ableiten lassen. Eine Prüfaufgabe 135 kann beispielsweise ein oder mehrere Kriterien festlegen, auf die die Aufnahme der Röntgendaten 192 optimiert werden soll. Für eine messtechnische Fragestellung, wie für einen Soll-Ist-Vergleich der Objektform kann beispielsweise eine andere Ortsauflösung benötigt werden als für das Finden von Defekten mit einem Mindestdurchmesser von einem Millimeter. Der Datenanalysator 130 kann die Prüfaufgabe 135 zur Festlegung einer Optimierungsaufgabe für das Vorhersagemodell 140 verwenden, d.h. die Optimierungsaufgabe kann abhängig von der Prüfaufgabe 135 sein, d.h. von einer konkreten Aufgabenstellung. Die Optimierungsaufgabe kann sich beispielsweise auf eine minimale Messzeit zur Durchsatzsteigerung oder auf eine erforderliche Bildqualität beziehen. Der Datenanalysator 130 kann den mindestens einen Aufnahmeparameter 150 je nach Prüfobjekt 110 und Prüfaufgabe 135 unterschiedlich wählen.

Die Vorrichtung 100 kann derart ausgestaltet sein, dass sie unabhängig von einem Betrieb der Computertomographieanlage 190 betrieben werden kann. Beispielsweise kann die Vorrichtung 100 ein eigenständiges Gerät sein.

Alternativ kann die Vorrichtung 100 oder die Messvorrichtung 120 in die Computertomographieanlage 190 integriert sein, beispielsweise durch einen Einbau von Messsensoren zum Erheben der Messdaten 122. Dadurch kann das Bereitstellen der Messdaten 122 über das Prüfobjekt 110 am gleichen Ort erfolgen, wie die Aufnahme der Röntgendaten 192 über das Prüfobjekt 110. Somit muss das Prüfobjekt 110 nach dem Bestimmen des mindestens einen Aufnahmeparameters 150 nicht mehr bewegt werden oder in eine andere Vorrichtung eingebaut werden. Alternativ oder zusätzlich kann der Datenanalysator 130 in die CT-Anlage 190 integriert sein, beispielsweise durch die Nutzung eines gemeinsamen Computers.

Die Vorrichtung 100 kann ausgestaltet sein, um unter Verwendung einer physikalischen Dichte des Prüfobjekts 110 den mindestens einen Aufnahmeparameter 150 für die Computertomographieanlage 190 und/oder einen alternativen oder zusätzlichen Aufnahmeparameter für eine Röntgenprojektion zu erhalten.

Die Messvorrichtung 120 kann einen Sensor 124 zur Ermittlung einer Masse aufweisen, um die Masse des Prüfobjekts 110 zu erhalten. Ferner kann die Messvorrichtung 120 einen stereoskopischen Sensor 126 aufweisen, um die Objektform des Prüfobjekts 110 zu erhalten. Die Messvorrichtung 120 kann ferner ausgestaltet sein, um basierend auf der Masse und der Objektform des Prüfobjekts 120 die physikalische Dichte des Prüfobjekts 110 bereitzustellen.

Die Messdaten 122 der Messvorrichtung 120 beinhalten mindestens die physikalische Dichte des Prüfobjekts 110 und/oder eine Masse des Prüfobjekts 110 und/oder die Objektform des Prüfobjekts 110.

Die Vorrichtung 100 kann basierend auf den Messdaten 122 einen oder mehrere Aufnahmeparameter 150 bestimmen. Beispielsweise kann die Vorrichtung 100 ausgestaltet sein, um basierend auf der physikalischen Dichte des Prüfobjekts 110 einen Parameter betreffend ein Röntgenspektrum zu erhalten. Ein Röntgenspektrum kann beispielsweise als ein Aufnahmeparameter 150 für die Computertomographieanlage 190 bereitgestellt werden. Ferner kann ein Röntgenspektrum als Aufnahmeparameter für eine Aufnahme einer Röntgenprojektion 160 zum Bestimmen des mindestens einen Aufnahmeparameters 150 für die Computertomographieanlage 190 bereitgestellt werden.

Ferner kann die Vorrichtung 100 ausgestaltet sein, um unter Verwendung der Objektform des Prüfobjekts 110 einen Abbildungsmaßstab für die Computertomographieanlage 190 und/oder für eine Röntgenprojektion bereitzustellen.

Die Vorrichtung 100 kann ausgestaltet sein, um unter Verwendung der physikalischen Dichte und der Röntgenprojektion eine Dichteverteilung des Prüfobjekts 110 zu erhalten, und um unter Verwendung der Dichteverteilung des Prüfobjekts 110 einen Aufnahmeparameter 150 für die Computertomographieanlage 190 bereitzustellen.

Die Messvorrichtung 120 kann zusätzlich einen Röntgenfluoreszenz-Sensor (XRF-Sensor) aufweisen. Die Vorrichtung 100 kann ausgestaltet sein, um unter Verwendung von Daten des Röntgenfluoreszenz-Sensors einen Aufnahmeparameter 150 für die Computertomographieanlage 190 bereitzustellen. Ein XRF-Sensor kann Informationen über die Materialzusammensetzung des Prüfobjekts 110 geben, welche der Datenanalysator 130 verwenden kann, um den mindestens einen Aufnahmeparameter 150 zu bestimmen, beispielsweise um ein für das Prüfobjekt 110 geeignetes Röntgenspektrum zu bestimmen. Die Vorrichtung 100 kann ausgestaltet sein, um unter Verwendung der Objektform des Prüfobjekts 110 und/oder der Definition einer Prüfaufgabe 135 einen Aufnahmeparameter 150 betreffend ein Achssystem der Computertomographieanlage 190 zu erhalten. Außerdem kann die Computertomographieanlage 190 kann ein Achssystem, beispielsweise ein Poly-CT System, aufweisen, wodurch mehrere Prüfobjekte 110 gleichzeitig geprüft werden können, was der weiteren Effizienzsteigerung dienen kann. Das Achssystem kann ausgelegt sein, beispielsweise skaliert sein, um mit einem beliebigen CT-System verwendet werden zu können. Das Achssystem kann beispielsweise mit variablen Drehzentren ausgestattet sein. Der Datenanalysator 130 kann unter Verwendung der Prüfaufgabe 135 einen Aufnahmeparameter 150 betreffend einen Einsatz des Achssystems bestimmen, wobei das Vorhersagemodell 140 Methoden des maschinellen Lernens aufweisen kann. Durch einen geeigneten Einsatz des Achssystems kann es möglich sein, je nach Objektform des Prüfobjekts 110 oder mehrerer Prüfobjekte, eine Durchsatzsteigerung von Faktor 2 bis 5 zu realisieren.

Zur Bestimmung des Aufnahmeparameters 150 verwendet der Datenanalysator 130 ein Vorhersagemodell 140. Das Vorhersagemodell 140 weist ein selbstlernendes algorithmisches Verfahren auf. Das Vorhersagemodell 140 basiert auf einer Vielzahl von Datensätzen, wobei jeder der Datensätze mindestens eine der folgenden Informationen aufweisen kann: eine Prüfaufgabe, eine Objektform eines Prüfobjekts, eine Dichteverteilung eines Prüfobjekts, eine physikalische Dichte eines Prüfobjekts, eine Masse des Prüfobjekts, eine Röntgenprojektion eines Prüfobjekts, einen CT-Volumendatensatz eines Prüfobjekts, einen Aufnahmeparameter einer Röntgenprojektion und/oder eines CT-Volumendatensatzes, ein oder mehrere Statusinformationen betreffend die Computertomographieanlage, ein oder mehrere Messdaten über ein Prüfobjekt, ein oder mehrere Röntgendaten über ein Prüfobjekt, eine Bildqualität von Röntgendaten über ein Prüfobjekt.

Das Vorhersagemodell 140 kann mit Methoden des maschinellen Lernens generiert werden, welche mit Datensätzen über unterschiedliche Aufnahmen von Röntgendaten über ein Prüfobjekt 110 antrainiert werden können. Ein solcher Datensatz über eine Aufnahme von Röntgendaten über ein geprüftes Prüfobjekt 110 kann beispielsweise die aufgenommenen Röntgendaten über das geprüfte Prüfobjekt 110 und/oder eine Auswertung oder Beurteilung einer Bildqualität der aufgenommenen Röntgendaten über das geprüfte Prüfobjekt 110 enthalten. Ferner kann ein Datensatz über eine Aufnahme von Röntgendaten eines Prüfobjekts 110 mit der Aufnahme der Röntgendaten in Verbindung stehende Informationen aufweisen, beispielsweise einen Aufnahmeparameter, insbesondere den von dem Vorhersagemodell 140 bereitzustellenden Aufnahmeparameter, oder der Datensatz kann eine Information aufweisen betreffend das geprüfte Prüfobjekt 110, beispielsweise eine Information der Art wie sie die von der Messvorrichtung 120 bereitgestellten Messdaten 122, beispielsweise eine Masse oder eine Objektform oder eine physikalische Dichte. Ferner kann ein Datensatz über eine Aufnahme von Röntgendaten über ein Prüfobjekt 110 eine Information betreffend die Computertomographieanlage 190 aufweisen, beispielsweise eine Information über einen Hersteller oder ein Modell oder eine Komponente der Computertomographieanlage 190 oder einen Zustand, beispielsweise einen Betriebszustand oder einen Wartungszustand, der Computertomographieanlage 190.

Das Ergebnis der Auswertung der Bildqualität bzw. der Wartungszustand selber kann in die Parametrisierung zum Ermitteln des Wartungszustands einfließen. Es kann sich beispielsweise um ein gemeinsames Vorhersagemodell 140 für die Aufnahmeparameter 150 und die Wartungsempfehlung handeln.

Das Vorhersagemodell 140 kann als Eingabe für das Bestimmen des mindestens einen Aufnahmeparameters 150 die von der Messstation 120 generierten Messdaten 122, und/oder die Röntgenprojektion 160 und/oder eine Kategorisierung der Prüfaufgabe 135 zur Vorhersage der zu verwendenden Parameter erhalten.

Der von dem Datenanalysator 130 bereitgestellte mindestens eine Aufnahmeparameter 150 kann beispielsweise mindestens einen der folgenden Aufnahmeparameter beinhalten: ein Röntgenspektrum, eine Röntgenspannung, eine physikalische Vorfilterung, ein Strom-Zeit-Produkt, einen Abbildungsmaßstab, eine Projektionszahl, einen Parameter betreffend ein Achssystem, einen Messmodus, eine Brennfleckgröße, eine Intensität, eine Ortsauflösung der Gesamtabbildung.

Zusätzlich zur Bestimmung des Aufnahmeparameters 150 kann der Datenanalysator 130 kann ferner ausgestaltet sein, um unter Verwendung einer mittels der Computertomographieanlage 190 erstellten Röntgenprojektion 160 des Prüfobjekts 110 und unter Verwendung des Vorhersagemodells 140 eine Wartungsempfehlung 180 für die Computertomographieanlage 190 bereitzustellen, d.h. beispielsweise einen Hinweis zur Wartung der Röntgenkomponenten, für die Computertomographieanlage 190 bereitzustellen. Dabei kann das Vorhersagemodell 140 ein selbstlernendes algorithmisches Verfahren aufweisen und das Vorhersagemodell 140 auf Informationen über eine Vielzahl von vorab mittels der Computertomographieanlage 190 und/oder anderen Computertomographieanlagen erstellten Röntgenprojektionen von dem Prüfobjekt 110 und/oder von weiteren Prüfobjekten basieren.

Das Vorhersagemodell 140 kann außerdem darauf trainiert sein, Hinweise zur Wartung der Röntgenkomponenten zu geben. Eine Wartungsempfehlung 180 kann beispielsweise Kalibrierungsaspekte von einem Detektor, beispielsweise einem Röntgendetektor, oder einem Achssystem, beispielsweise einem PolyCT-System beinhalten. Eine Wartungsempfehlung 180 kann beispielsweise eine Degradation, eine Sensitivität oder ein Grundrauschen eines Röntgendetektors betreffen. Ferner kann eine Wartungsempfehlung 180 eine Röntgenröhre betreffen, beispielsweise eine Fokussierung eines Röntgenstrahls, eine Rotation eines Röntgentargets oder eine Konditionierung der Röntgenröhre. Die Wartungsempfehlung 180 kann eine rechtzeitige Durchführung einer dieser Maßnahmen sicherstellen.

Die Wartungsempfehlung 180 für die Computertomographieanlage 190 kann optional ausschließlich auf dem Vorhersagemodell 140 und der Röntgenprojektion 160 des Prüfobjekts 110 basieren.

Der Datenanalysator 130 kann basierend auf der mittels der Computertomographieanlage 190 erstellten Röntgenprojektion 160 des Prüfobjekts 110 eine Information über eine Bildqualität der mittels der Computertomographieanlage 190 erstellten Röntgenprojektion 160 erhalten. Dadurch ist es möglich, dass der Datenanalysator 130 unter Verwendung der Information über eine Bildqualität der mittels der Computertomographieanlage 190 erstellten Röntgenprojektion 160 eine Information über einen aktuellen Wartungszustand der Computertomographieanlage 190 ermittelt. Damit ist es möglich, dass die Vorrichtung 100 basierend auf der Information über den aktuellen Wartungszustand der Computertomographieanlage 190 die Wartungsempfehlung 180 für die Computertomographieanlage 190 bereitstellt.

Im Folgenden wird die Funktion und das Zusammenspiel der einzelnen Komponenten der Vorrichtung 100 beschrieben.

Die Vorrichtung 100 kann dazu ausgelegt sein, um mit verschiedenen Computertomographieanlagen verwendet werden zu können. Dementsprechend kann die Computertomographieanlage 190 eine beliebige Computertomographieanlage eines beliebigen Herstellers sein.

Die Vorrichtung 100 kann ausgelegt sein, um den Aufnahmeparameter 150 elektronisch an die Computertomographieanlage 190 zu übertragen. Der Aufnahmeparameter 150 kann aber beispielsweise auch durch einen Benutzer übertragen werden. Zum Beispiel kann die Vorrichtung 100 ausgelegt sein, um den Aufnahmeparameter 150 anzuzeigen, so dass ein Benutzer den Aufnahmeparameter 150 in die Computertomographieanlage 190 oder in ein Programm zur Bedienung der Computertomographieanlage eingeben kann. Dadurch kann sichergestellt werden, dass die Vorrichtung 100 mit jeder Computertomographieanlage 190 und unabhängig von einem Hersteller der Computertomographieanlage 190 einsetzbar ist.

Der Datenanalysator 130 kann die Röntgenprojektion 160 verwenden, um unter Verwendung einer physikalischen Dichte des Prüfobjekts 110, die in den Messdaten 122 enthalten sein kann oder aus den Messdaten 122 berechnet werden kann, eine Dichteverteilung des Prüfobjekts 110 zu bestimmen, die beispielsweise als Basis für die Voreinstellung von Belichtungszeit und Projektionszahl dienen kann.

Optional kann die Messvorrichtung 120 einen Röntgendetektor aufweisen, um die Röntgenprojektion 160 des Prüfobjekts 110 aufzunehmen. Dadurch kann die Röntgenprojektion 160 aufgenommen werden, während die Computertomographieanlage 190 für eine Aufnahme von Röntgendaten über ein von dem Prüfobjekt 110 verschiedenen Prüfobjekt zur Verfügung steht. Ferner kann dadurch das Bestimmen des mindestens einen Aufnahmeparameters 150 abgeschlossen werden, bevor das Prüfobjekt 110 zur Aufnahme der Röntgendaten 192 in die Computertomographieanlage 190 eingebracht wird.

Optional kann die Röntgenprojektion 160 des Prüfobjekts 110 mittels der Computertomographieanlage 190 aufgenommen werden, wodurch die Messvorrichtung 120 keine zusätzliche Röntgenhardware, wie zum Beispiel einen Röntgendetektor oder eine Röntgenröhre benötigt. Dadurch ist die Messvorrichtung günstiger, einfacher zu bedienen und sie unterliegt keinen Strahlenschutzrichtlinien
Alternativ oder zusätzlich zu einem selbstlernenden Algorithmus kann das Vorhersagemodell 140 ein physikalisches oder röntgenphysikalisches oder analytisches Modell oder ein algorithmisches Verfahren aufweisen.

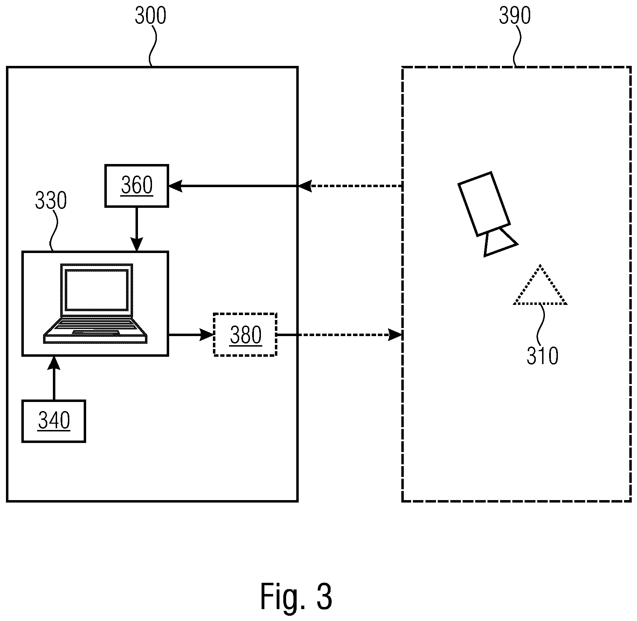

Fig. 3 zeigt ein weiteres Ausführungsbeispiel einer Vorrichtung 300 gemäß einem weiteren Aspekt der Erfindung. Diese Vorrichtung 300 ist ausgestaltet, um eine Wartungsempfehlung 180 für eine Computertomographieanlage 390 bereitzustellen. Die Vorrichtung 300 weist einen Datenanalysator 330 auf, der unter Verwendung einer mittels der Computertomographieanlage 390 erstellten Röntgenprojektion 360 eines Prüfobjekts 310 und unter Verwendung eines Vorhersagemodells 340 die Wartungsempfehlung 380 für die Computertomographieanlage 390 bereitstellt. Das Vorhersagemodell 340 weist ein selbstlernendes algorithmisches Verfahren auf. Ferner basiert das Vorhersagemodell 340 auf Informationen einer Vielzahl von vorab mittels der Computertomographieanlage 390 und/oder weiteren Computertomographieanlagen erstellten Röntgenprojektionen von dem Prüfobjekt 310 und/oder von weiteren Prüfobjekten.

Die Vorrichtung 300 kann der Vorrichtung 100 aus Fig. 1 oder Fig. 2 entsprechen. Der Datenanalysator 330 kann dem Datenanalysator 130 aus Fig. 1 oder Fig. 2 entsprechen. Das Vorhersagemodell 340 kann dem Vorhersagemodell 140 aus Fig. 1 oder Fig. 2 entsprechen. Die Röntgenprojektion 360 kann der Röntgenprojektion 160 aus Fig. 2 entsprechen. Die Wartungsempfehlung 380 kann der Wartungsempfehlung 180 aus Fig. 2 entsprechen. Die CT-Anlage 390 kann der CT-Anlage 190 aus Fig. 1 oder Fig. 2 entsprechen. Das Prüfobjekt 310 kann dem Prüfobjekt 110 aus Fig. 1 oder Fig. 2 entsprechen.

Der Datenanalysator 330 kann unter Verwendung der mittels der Computertomographieanlage 390 erstellten Röntgenprojektion 360 des Prüfobjekts 310 eine Information über eine Bildqualität der mittels der Computertomographieanlage 390 erstellten Röntgenprojektion 360 erhalten. Ferner kann der Datenanalysator 330 unter Verwendung der Information über eine Bildqualität der mittels der Computertomographieanlage 390 erstellten Röntgenprojektion 360 eine Information über einen aktuellen Wartungszustand der Computertomographieanlage 390 erhalten, wobei die Vorrichtung 300 unter Verwendung der Information über den aktuellen Wartungszustand der Computertomographieanlage 390 die Wartungsempfehlung 380 für die Computertomographieanlage bereitstellen kann.

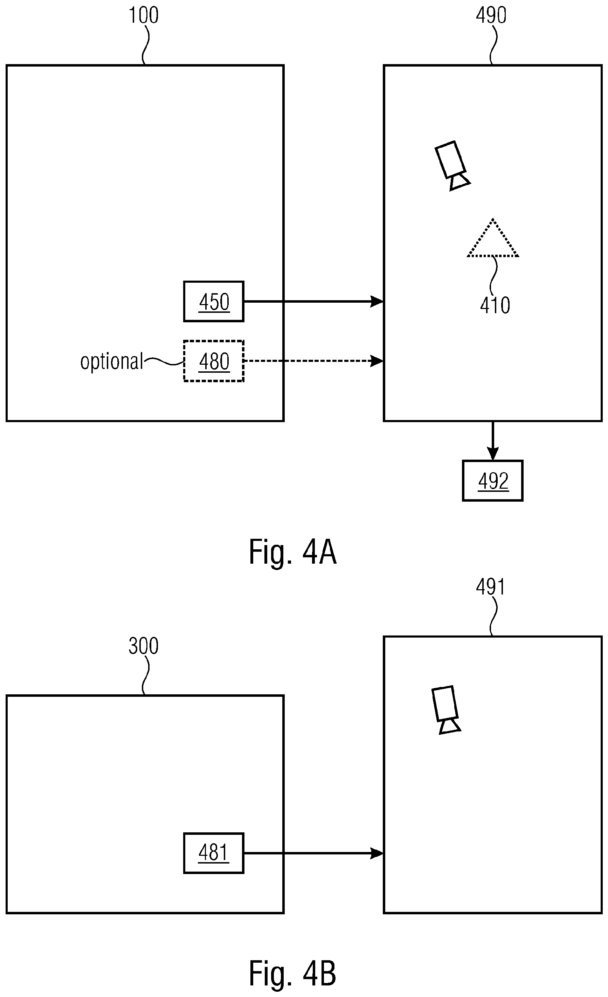

Fig. 4A zeigt ein Ausführungsbeispiel einer gesamten Anlage beinhaltend eine Computertomographieanlage 490 und eine erfindungsgemäße Vorrichtung 100. Die Vorrichtung 100 dient zum Bestimmen von mindestens einem Aufnahmeparameter 450 zur Aufnahme von Röntgendaten 492 eines Prüfobjekts 410 mittels der Computertomographieanlage 490.

Die Wartungsempfehlung 480 kann der Wartungsempfehlung 180 aus Fig. 2 entsprechen. Die CT-Anlage 490 kann der CT-Anlage 190 aus Fig. 1 oder Fig. 2 entsprechen. Daher sei für Details zum Bestimmen des mindestens einen Aufnahmeparameters 450 auf die Beschreibung zu den Figuren 1 und 2 verwiesen.

Alternativ oder zusätzlich zu der mit Referenz auf die Figuren 1 und 2 beschriebenen Vorrichtung 100 kann die in Figur 4A gezeigte Vorrichtung 100 auch eine Wartungsempfehlung 480 für die Computertomographieanlage bereitstellen.

Die in Fig. 4A gezeigte Anordnung der Vorrichtung 100 in Bezug auf die CT-Anlage 490 ist schematisch zu verstehen, d.h. die Vorrichtung 100 kann ganz oder in Teilen räumlich getrennt oder neben oder innerhalb der CT-Anlage 490 angeordnet sein oder in die CT-Anlage 490 integriert sein. Möglicherweise können auch Komponenten von der Vorrichtung 100 und der CT-Anlage 490 gemeinsam genutzt werden.

Fig. 4B zeigt ein weiteres Ausführungsbeispiel einer gesamten Anlage beinhaltend eine Computertomographieanlage 491 und eine erfindungsgemäße Vorrichtung 300, wobei die Vorrichtung hier zum Bereitstellen einer Wartungsempfehlung 481 für die Computertomographieanlage 491 dient.

Die Wartungsempfehlung 481 kann der Wartungsempfehlung 380 aus Fig. 3 entsprechen. Die CT-Anlage 491 kann der CT-Anlage 390 aus Fig. 3 entsprechen. Daher sei für Details zum Bereitstellen einer Wartungsempfehlung auf die Beschreibung zu Figur 3 verwiesen.

Die in Fig. 4B gezeigte Anordnung der Vorrichtung 300 in Bezug auf die CT-Anlage 491 ist schematisch zu verstehen, d.h. die Vorrichtung 300 kann ganz oder in Teilen räumlich getrennt oder neben oder innerhalb der CT-Anlage 491 angeordnet sein oder in die CT-Anlage 191 integriert sein. Möglicherweise können auch Komponenten von der Vorrichtung 300 und der CT-Anlage 491 gemeinsam genutzt werden.

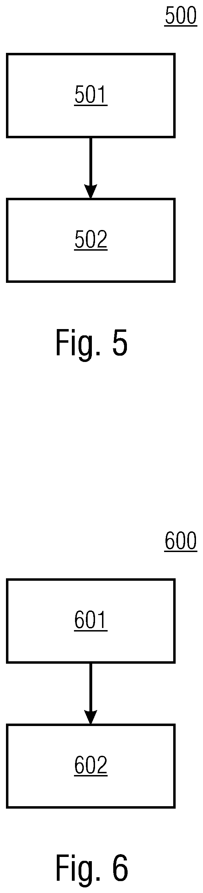

Fig. 5 zeigt ein Blockdiagramm eines Verfahrens 500 zum Bestimmen eines Aufnahmeparameters 150, 450 für eine Computertomographieanlage 190, 490 gemäß einem Ausführungsbeispiel. Das Verfahren 500 zum Bestimmen von mindestens einem Aufnahmeparameter 150, 450 zur Aufnahme von Röntgendaten 192, 492 eines Prüfobjekts 110, 410 mittels einer Computertomographieanlage 190, 490 weist einen Schritt 501 auf. Im Schritt 501 werden Messdaten 122 erstellt, beispielsweise gemessen oder aufgenommen, wobei die Messdaten 122 Informationen über eine physikalische Dichte des Prüfobjekts 110, 410 beinhalten. In Schritt 502 wird der mindestens eine Aufnahmeparameter 150, 450 für die Computertomographieanlage 190, 490 unter Verwendung eines Vorhersagemodells 140 bereitgestellt.

Fig. 6 zeigt ein Blockdiagramm eines Verfahrens 600 zum Bereitstellen einer Wartungsempfehlung 180, 380, 480, 481 für eine Computertomographieanlage 190, 390, 490, 491 gemäß einem Ausführungsbeispiel. In Schritt 601 wird eine mittels der Computertomographieanlage 190, 390, 490, 491 erstellte Röntgenprojektion 160, 360 eines Prüfobjekts 110, 310, 410 erhalten. In Schritt 602 wird die Wartungsempfehlung 180, 380, 480, 481 für die Computertomographieanlage 190, 390, 490, 491 unter Verwendung der Röntgenprojektion 160, 360 des Prüfobjekts 110, 310, 410 und unter Verwendung eines Vorhersagemodells 140, 340 basierend auf einer Bildqualität der Röntgenprojektion 160, 360 des Prüfobjekts 110, 310, 410 bereitgestellt, wobei das Vorhersagemodell 140, 340 ein selbstlernendes algorithmisches Verfahren aufweist und wobei das Vorhersagemodell 140, 340 auf Informationen einer Vielzahl von vorab mittels der Computertomographieanlage 190, 390, 490, 491 und/oder anderen Computertomographieanlagen erstellten Röntgenprojektionen von dem Prüfobjekt 110, 310, 410 und/oder von weiteren Prüfobjekten basiert.

Nachfolgend soll die vorliegende Erfindung, beinhaltend die Vorrichtung 100, 300, und das Verfahren 500 und 600, nochmals in anderen Worten zusammengefasst werden:
Die Erfindung weist ein kognitives Computertomographie-System 190 auf, welches als Addon passend für Mikro-CT-Anlagen aller Hersteller realisierbar ist. Durch die simultane Auswertung multimodaler Sensordaten in Kombination mit aufgenommenen Projektionen einer Standard-CT-Anlage 190 können mit Methoden des maschinellen Lernens (ML) 140 optimale Aufnahmeparameter ermittelt und Hinweise zur Wartung der Röntgenkomponenten gegeben werden.

Gemäß einem Ausführungsbeispiel kann der Datenanalysator 130 mindestens die folgenden Parameter ausgeben: das geeignete Röntgenspektrum (Röntgenenergie, physikalische Vorfilterung), Strom-Zeit-Produkt, Abbildungsmaßstab, Projektionszahl und der Einsatz von PolyCT.

Gemäß einem Ausführungsbeispiel schlägt der Datenanalysator 130 einen Messmodus, d.h. eine Brennfleckgröße, vor, welcher auch eine Intensität und eine Ortsauflösung der Gesamtabbildung beeinflusst. Durch die Wahl eines geeigneten Messmodus kann eine Röntgenquelle der Computertomographieanlage 190 geschont werden.

Die Erfindung stellt eine Messstation bereit, die passend für Mikro-CT-Anlagen 190 aller Hersteller sein kann, und die multimodale Daten über das Prüfobjekt 110 zur Verfügung stellen kann. Zudem gehört zu der Erfindung ein algorithmisches Verfahren, das sowohl die Projektionsdaten einer CT-Anlage 190 als auch die Messdaten aus der Messstation verwenden kann, um mit Hilfe von Methoden des Maschinellen Lernens 140 (ML) ein oder mehrere objekt- und prüfaufgabenspezifischen Aufnahmeparameter für eine CT-Messung zu ermitteln und Hinweise zur Wartung der Röntgenkomponenten zu geben. Durch diese Selbstkalibrierung ergibt sich insgesamt ein "kognitives" CT-Addon.

Die Wirkungen des kognitiven CT-Addons bestehen in einer Bestimmung von CT-Aufnahmeparametern sowie dem Hinweis auf die Wartung von Röntgenkomponenten. Die Vorteile des kognitiven CT-Addons, beispielsweise der Vorrichtung 100, 300 oder des Verfahrens 500 oder 600, prägen sich folgendermaßen aus: Zum einen wird eine Vergleichbarkeit von CT-Dienstleistungsmessungen hergestellt. Diese führt zu einer Stärkung des Vertrauens in die CT als Qualitätssicherungswerkzeug und begünstigt die Einsetzbarkeit der CT für normierte Prüfvorschriften.

Zum anderen wird die Wirtschaftlichkeit von CT-Dienstleistern durch Einsatz des kognitiven CT-Addons, beispielsweise der Vorrichtung 100, 300 oder des Verfahrens 500 oder 600, erhöht. Die Auslastung der Dienstleistungsanlagen wird heutzutage nicht durch mangelnde Aufträge, sondern durch lange Rüstzeiten, vermeidbare Wiederholungsmessungen und fehlendes oder nicht ausreichend erfahrenes Fachpersonal begrenzt. Die Vorrichtung 100, 300 und das Verfahren 500, 600 setzen an diesen Punkten an: Rüstzeiten werden verkürzt, Wiederholungsmessungen werden reduziert, neu eingestellte Fachkräfte können früher, d.h. nach einer weniger intensiven Einarbeitung tätig werden. Es können in derselben Zeit also mehr Prüfaufträge als bisher bearbeitet werden und zwar mit einer reproduzierbaren und hohen Qualität.

Gleichzeitig bieten die Vorrichtung 100, 300 und die Verfahren 500 und 600 den Vorteil, dass erforderliche Wartungsschritte rechtzeitig erkannt werden und somit unnötige Standzeiten und kostspielige Reparaturen reduziert werden. Dies erhöht nicht nur wiederum die Wirtschaftlichkeit des Betriebs, sondern ermöglicht auch einen nachhaltigen Umgang mit materiellen Ressourcen.

Alternativ zu einem Einsatz der erfindungsgemäßen Vorrichtung 100 oder des erfindungsgemäßen Verfahrens 500 kann ein schneller Prescan vor der eigentlichen CT-Messung eine Abschätzung der Bildqualität ermöglichen [4]. Dies ist zeitintensiv und bietet keine Lernfähigkeit. Zudem ist dieser Ansatz nur dann durchführbar, wenn die Schnittstellen zu den Röntgenkomponenten offen liegen. Dieser Ansatz ist daher anders als die Vorrichtung 100 und das Verfahren 500 nicht herstellerübergreifend für alle Mikro-CT-Systeme anwendbar.

Alternativ zu einem Einsatz der erfindungsgemäßen Vorrichtung 100, 300 oder des erfindungsgemäßen Verfahrens 500, 600 können Sensordaten als Eingabe für Verfahren zur Parametrisierung verwendet werden, die nicht auf Kl-Methoden basieren, sondern etwa simulative oder röntgenphysikalische Grundlagen haben. In diesem Fall besteht jedoch ein Nachteil in der fehlenden Lernfähigkeit des Systems.

Erfindungsgemäß kann für die Aufnahmeplanung oder zum Zweck der prädiktiven Wartung von CT-Systemen oder Röntgenkomponenten das hierin beschriebene Verfahren eingesetzt werden, das über eine Sensoranbindung verfügen kann, darüber Objekt-/Materialeigenschaften ermitteln kann und diese mit Kl-Methoden auswerten kann. Dies kann erfindungsgemäß beispielsweise dadurch ermöglicht werden, indem eine CT-Anlage 190 mit einer Messvorrichtung (z.B. Laborwaage), und/oder einem Kraftsensor und/oder weiterer Sensorik ausgestattet wird, woraus beispielsweise die mittlere Dichte oder Oberflächendaten des Untersuchungsobjekts 110 ermittelt werden können.

Im Stand der Technik ist Prüfungspersonal in der Regel darauf angewiesen, das Prüfobjekt und die Fragestellung (d.h. die Prüfaufgabe) genau zu kennen. Auf diese Information nicht angewiesen zu sein ist jedoch ein wesentlicher Vorteil der vorliegenden Erfindung. Unter Verwendung der vorliegenden Erfindung können Anbieter von CT-Dienstleistungen ihren Durchsatz an CT-Messungen direkt erhöhen, da durch eine verkürzte Messzeit, durch Reduktion der manuellen Parametrisierung und durch Wegfall von Wiederholungsmessungen in derselben Zeit mehr Aufträge als bisher bearbeitet werden können. Ferner führt der Vorstoß in der Entwicklung additiver Fertigungsverfahren mittelfristig zu einer Dezentralisierung der Fertigung. Um den logistischen Herausforderungen gerecht zu werden wird es also einen erhöhten Bedarf an Qualitätssicherungswerkzeugen an unterschiedlichen Standorten bei gleichbleibender Prüfqualität geben. Gleichzeitig ist die Qualitätssicherung mit CT erforderlich, da es bisher keine langfristigen Erfahrungswerte im Hinblick auf die Qualität additiv gefertigter Bauteile gibt. Da die Vielzahl an Untersuchungsobjekten die logistischen Möglichkeiten der Dienstleistungslabore sprengen würden, muss die CT einem breiten Anwenderkreis zugänglich werden.

Forschungseinrichtungen nutzen CT zur Lösung von Fragestellungen aus der eigenen Disziplin, etwa aus der Geologie, der Glaziologie, der Verfahrenstechnik, der Weltraumphysik oder der Kristallographie. Durch den Einsatz des kognitiven CT-Addons, beispielsweise der Vorrichtung 100, 300 oder des Verfahrens 500, 600 kann eine verbesserte Bildqualität und damit Auswertbarkeit der Daten erzielt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen

[1] R. Schielein, "Analytische Simulation und Aufnahmeplanung für die industrielle Röntgencomputertomographie," Dissertation, Universität Würzburg, 2018.
[2] Fraunhofer-Gesellschaft, "Vorrichtung und Verfahren zur Berechnung einer Aufnahmetrajektorie". Patent Offenlegungsschrift: DE 102016213403 A1, 2018.
[3] S. Reisinger, "Simulationsgestützte Aufnahmeplanung in der industriellen Computertomographie," Masterarbeit, Universität Bamberg, 2010.
[4] M. Reiter et al., "Evaluation of a histogram-based image quality measure for X-ray computed tomography," iCT, 2012.
[5] [Online]. Available: https://arxiv.org/ftp/arxiv/papers/1609/1609.08508.pdf.
[6] [Online]. Available: https://www.researchgate.net/publication/315753315_Lesion_ detection_in_CT_images_using_Deep_Learning_semantic_segmentation_ tachnique.
[7] [Online]. Available: https://core.ac.uk/download/pdf/76948049.pdf,
[8] [Online]. Available: https://ws680.nist.gov/publication/get_pdf.cfm?pub_id=924455.
[9] [Online]. Available: https://arxiv.org/ftp/arxiv/papers/1901/1901.01211.pdf.
[10] S. Rüger, "Vergleich verschiedener Methoden zur Detektion von Knochen in Geweben mit Hilfe künstlicher neuronaler Netze auf Basis von Dual-Energy Röntgenbildern" "Masterarbeit, Universität Erlangen-Nürnberg, 2018.
[11] G. E. Company, "Diagnostic System with learning capabilities.". Patent US6442542, 2002.
[12] Siemens AG, 2007. Method and device for user-specific parametrization of an x-ray device. Patent US 7298823.

## Patentansprüche

1. Vorrichtung (100) zum Bestimmen von mindestens einem Aufnahmeparameter (150) zur Aufnahme einer Röntgenprojektion (192) eines Werkstücks (110) mittels einer Computertomographieanlage (190), wobei die Vorrichtung (100) aufweist:
eine Messvorrichtung (120), die ausgestaltet ist, um Messdaten (122) über das Werkstück (110) bereitzustellen, wobei die Messdaten (122) der Messvorrichtung (120) eine mittlere physikalische Dichte des Werkstücks (110) und/oder eine Masse des Werkstücks (110) beinhalten; und
einen Datenanalysator (130), der ausgestaltet ist, um unter Verwendung der Messdaten (122) der Messvorrichtung (120) und unter Verwendung eines Vorhersagemodells (140) den mindestens einen Aufnahmeparameter (150) für die Computertomographieanlage (190) zu bestimmen,
wobei das Vorhersagemodell (140) ein selbstlernendes algorithmisches Verfahren aufweist und auf einer Vielzahl von Datensätzen basiert, wobei jeder der Datensätze mindestens eine der folgenden Informationen aufweist:
eine Prüfaufgabe, eine Objektform eines Werkstücks, eine Dichteverteilung eines Werkstücks, eine physikalische Dichte eines Werkstücks, eine Masse des Werkstücks, eine Röntgenprojektion eines Werkstücks, einen CT-Volumendatensatz eines Werkstücks, einen Aufnahmeparameter einer Röntgenprojektion und/oder eines CT-Volumendatensatzes, eine Statusinformation betreffend die Computertomographieanlage, ein oder mehrere Messdaten über ein Werkstück, ein oder mehrere Röntgendaten über ein Werkstück, eine Information über eine Bildqualität von Röntgendaten eines Werkstücks.

2. Vorrichtung (100) gemäß Anspruch 1,
wobei der Datenanalysator (130) ausgestaltet ist, um zum Bestimmen des mindestens einen Aufnahmeparameters (150) für die Computertomographieanlage (190) ferner eine Röntgenprojektion (160) des Werkstücks (110) und/oder eine Definition einer Prüfaufgabe (135) zu verwenden.

3. Vorrichtung (100) gemäß einem der vorhergehenden Ansprüche,
wobei die Vorrichtung (100) unabhängig von der Computertomographieanlage (190) betreibbar ist.

4. Vorrichtung (100) gemäß einem der vorhergehenden Ansprüche,
wobei die Messdaten (122) der Messvorrichtung (120) eine Objektform des Werkstücks (110) beinhalten.

5. Vorrichtung (100) gemäß einem der vorhergehenden Ansprüche,
wobei die Vorrichtung (100) ausgestaltet ist, um eine physikalische Dichte des Werkstücks (110) zu ermitteln und basierend darauf den mindestens einen Aufnahmeparameter (150) für die Computertomographieanlage und/oder einen Aufnahmeparameter für eine Röntgenprojektion des Werkstücks (110) und/oder einen Parameter betreffend ein Röntgenspektrum zu bestimmen, und/oder
wobei die Vorrichtung (100) ausgestaltet ist, um basierend auf der physikalischen Dichte und einer Röntgenprojektion des Werkstücks (110) eine Dichteverteilung des Werkstücks (110) zu bestimmen, und um basierend auf der Dichteverteilung des Werkstücks (110) den mindestens einen Aufnahmeparameter (150) für die Computertomographieanlage zu bestimmen.

6. Vorrichtung (100) gemäß einem der vorhergehenden Ansprüche,
wobei die Messvorrichtung (120) einen Sensor (124) zum Ermitteln einer Masse aufweist, um die Masse des Werkstücks (110) zu ermitteln; und
wobei die Messvorrichtung (120) ferner einen stereoskopischen Sensor (126) aufweist, um die Objektform des Werkstücks (110) zu bestimmen;
wobei die Messvorrichtung (120) ausgestaltet ist, um basierend auf der Masse und der Objektform des Werkstücks (120) die physikalische Dichte des Werkstücks (110) zu bestimmen.

7. Vorrichtung (100) gemäß einem der vorhergehenden Ansprüche,
wobei die Vorrichtung (100) ausgestaltet ist, um die Objektform des Werkstücks (110) zu ermitteln und unter Verwendung der Objektform des Werkstücks (110) einen Abbildungsmaßstab für die Computertomographieanlage (190) und/oder für eine Röntgenprojektion bereitzustellen, und/oder
wobei die Vorrichtung (100) ausgestaltet ist, um unter Verwendung der Objektform des Werkstücks (110) und/oder der Definition einer Prüfaufgabe (135) einen Aufnahmeparameter (150) betreffend ein Achssystem der Computertomographieanlage (190) zu erhalten.

8. Vorrichtung (100) gemäß einem der vorhergehenden Ansprüche,
wobei die Messvorrichtung (120) einen Röntgenfluoreszenz-Sensor aufweist; und
wobei die Vorrichtung (100) ausgestaltet ist, um unter Verwendung von Daten des Röntgenfluoreszenz-Sensors den mindestens einen Aufnahmeparameter (150) für die Computertomographieanlage (190) zu bestimmen.

9. Vorrichtung (100) gemäß einem der vorhergehenden Ansprüche,
wobei der von dem Datenanalysator (130) bestimmte mindestens eine Aufnahmeparameter (150) mindestens einen der folgenden Parameter aufweist:
ein Röntgenspektrum, eine Röntgenspannung, eine physikalische Vorfilterung, ein Strom-Zeit-Produkt, einen Abbildungsmaßstab, eine Projektionszahl, einen Parameter betreffend ein Achssystem, einen Messmodus, eine Brennfleckgröße, eine Intensität, eine Ortsauflösung der Gesamtabbildung.

10. Vorrichtung (100) gemäß einem der vorhergehenden Ansprüche,
wobei der Datenanalysator (130) ausgestaltet ist, um unter Verwendung einer mittels der Computertomographieanlage (190) erstellten Röntgenprojektion (160) des Werkstücks (110) und unter Verwendung des Vorhersagemodells (140) eine Wartungsempfehlung (180) für die Computertomographieanlage (190) bereitzustellen,
wobei das Vorhersagemodell (140) ein selbstlernendes algorithmisches Verfahren aufweist und wobei das Vorhersagemodell (140) auf Informationen über eine Vielzahl von vorab mittels der Computertomographieanlage (190) und/oder anderen Computertomographieanlagen erstellten Röntgenprojektionen von dem Werkstück (110) und/oder von weiteren Werkstücken basiert.

11. Vorrichtung (100) gemäß Anspruch 10,
wobei der Datenanalysator (130) ausgestaltet ist, um basierend auf der mittels der Computertomographieanlage (190) erstellten Röntgenprojektion (160) des Werkstücks (110) eine Information über eine Bildqualität der mittels der Computertomographieanlage (190) erstellten Röntgenprojektion (160) zu bestimmen, und
wobei der Datenanalysator (130) ausgestaltet ist, um basierend auf der Information über die Bildqualität der mittels der Computertomographieanlage (190) erstellten Röntgenprojektion (160) eine Information über einen aktuellen Wartungszustand der Computertomographieanlage (190) zu bestimmen, und
wobei die Vorrichtung (100) ausgestaltet ist, um basierend auf der Information über den aktuellen Wartungszustand der Computertomographieanlage (190) die Wartungsempfehlung (180) für die Computertomographieanlage (190) bereitzustellen.

12. Computertomographieanlage (490) mit einer Vorrichtung (100) zum Bestimmen von mindestens einem Aufnahmeparameter (450) zur Aufnahme von Röntgendaten (492) eines Werkstücks (410) mittels der Computertomographieanlage (490) gemäß einem der Ansprüche 1-11.

13. Verfahren (500) zum Bestimmen von mindestens einem Aufnahmeparameter (150, 450) zur Aufnahme einer Röntgenprojektion (192, 492) eines Werkstücks (110, 410) mittels einer Computertomographieanlage (190, 490), wobei das Verfahren (500) aufweist:
Ermitteln (501) von Messdaten (122) über das Werkstück (110, 410), wobei die Messdaten (122) Informationen über eine mittlere physikalische Dichte des Werkstücks (110, 410) beinhalten und/oder eine Masse des Werkstücks (110) beinhalten; und
Bestimmen (502) des mindestens einen Aufnahmeparameters (150, 450) für die Computertomographieanlage (190, 490) basierend auf den Messdaten (122) und unter Verwendung eines Vorhersagemodells (140),
wobei das Vorhersagemodell (140) ein selbstlernendes algorithmisches Verfahren aufweist und auf einer Vielzahl von Datensätzen basiert, wobei jeder der Datensätze mindestens eine der folgenden Informationen aufweist:
eine Prüfaufgabe, eine Objektform eines Werkstücks, eine Dichteverteilung eines Werkstücks, eine physikalische Dichte eines Werkstücks, eine Masse des Werkstücks, eine Röntgenprojektion eines Werkstücks, einen CT-Volumendatensatz eines Werkstücks, einen Aufnahmeparameter einer Röntgenprojektion und/oder eines CT-Volumendatensatzes, eine Statusinformation betreffend die Computertomographieanlage, ein oder mehrere Messdaten über ein Werkstück, ein oder mehrere Röntgendaten über ein Werkstück, eine Information über eine Bildqualität von Röntgendaten eines Werkstücks.

14. Computerprogramm mit einem Programmcode zur Durchführung des Verfahrens (500) gemäß Anspruch 13, wenn das Programm auf einem Computer abläuft.

## Claims

1. A device (100) for determining at least one capturing parameter (150) for capturing an X-ray projection (192) of a workpiece (110) by means of a computed tomography system (190), the device (100) comprising:
a measuring device (120) configured to provide measurement data (122) about the workpiece (110), wherein the measurement data (122) of the measuring device (120) include an average physical density of the workpiece (110) and/or a mass of the workpiece (110); and
a data analyzer (130) configured to determine, using the measurement data (122) of the measuring device (120) and using a prediction model (140), the at least one capturing parameter (150) for the computed tomography system (190),
wherein the prediction model (140) comprises a self-learning algorithmic method and is based on a plurality of data sets, wherein each of the data sets comprises at least one of the following pieces of information:
a test task, an object shape of a workpiece, a density distribution of a workpiece, a physical density of a workpiece, a mass of the workpiece, an X-ray projection of a workpiece, a CT volume data set of a workpiece, a capturing parameter of an X-ray projection and/or of a CT volume data set, a status information relating to the computed tomography system, one or more measurement data about a workpiece, one or more X-ray data about a workpiece, a piece of information about an image quality of X-ray data of a workpiece.

2. The device (100) according to claim 1,
wherein the data analyzer (130) is configured to further use an X-ray projection (160) of the workpiece (110) and/or a definition of a test task (135) for determining the at least one capturing parameter (150) for the computed tomography system (190).

3. The device (100) according to one of the preceding claims,
wherein the device (100) is operable independently of the computed tomography system (190).

4. The device (100) according to one of the preceding claims,
wherein the measurement data (122) of the measuring device (120) include an object shape of the workpiece (110).

5. The device (100) according to one of the preceding claims,
wherein the device (100) is configured to determine a physical density of the workpiece (110) and, based thereon, to determine the at least one capturing parameter (150) for the computed tomography system and/or a capturing parameter for an X-ray projection of the workpiece (110) and/or a parameter relating to an X-ray spectrum, and/or
wherein the device (100) is configured to determine, based on the physical density and an X-ray projection of the workpiece (110), a density distribution of the workpiece (110) and to determine, based on the density distribution of the workpiece (110), the at least one capturing parameter (150) for the computed tomography system.

6. The device (100) according to one of the preceding claims,
wherein the measuring device (120) comprises a sensor (124) for determining a mass in order to determine the mass of the workpiece (110); and
wherein the measuring device (120) further comprises a stereoscopic sensor (126) in order to determine the object shape of the workpiece (110);
wherein the measuring device (120) is configured to determine, based on the mass and the object shape of the workpiece (120), the physical density of the workpiece (110).

7. The device (100) according to one of the preceding claims,
wherein the device (100) is configured to determine the object shape of the workpiece (110) and to provide, using the object shape of the workpiece (110), a reproduction scale for the computed tomography system (190) and/or for an X-ray projection, and/or
wherein the device (100) is configured to obtain, using the object shape of the workpiece (110) and/or the definition of a test task (135), a capturing parameter (150) relating to an axis system of the computed tomography system (190).

8. The device (100) according to one of the preceding claims,
wherein the measuring device (120) comprises an X-ray fluorescence sensor; and wherein the device (100) is configured to determine, using data of the X-ray fluorescence sensor, the at least one capturing parameter (150) for the computed tomography system (190).

9. The device (100) according to one of the preceding claims,
wherein the at least one capturing parameter (150) determined by the data analyzer (130) comprises at least one of the following parameters:
an X-ray spectrum, an X-ray voltage, a physical pre-filtering, a current-time product, a reproduction scale, a projection number, a parameter relating to an axis system, a measurement mode, a focal spot size, an intensity, a spatial resolution of the overall imaging.

10. The device (100) according to one of the preceding claims,
wherein the data analyzer (130) is configured to provide, using an X-ray projection (160) of the workpiece (110) created by means of the computed tomography system (190) and using the prediction model (140), a maintenance recommendation (180) for the computed tomography system (190),
wherein the prediction model (140) comprises a self-learning algorithmic method and wherein the prediction model (140) is based on information about a plurality of X-ray projections of the workpiece (110) and/or of further workpieces, wherein the X-ray projections are created beforehand by means of the computed tomography system (190) and/or other computed tomography systems.

11. The device (100) according to claim 10,
wherein the data analyzer (130) is configured to determine, based on the X-ray projection (160) of the workpiece (110) created by means of the computed tomography system (190), a piece of information about an image quality of the X-ray projection (160) created by means of the computed tomography system (190), and
wherein the data analyzer (130) is configured to determine, based on the piece of information about the image quality of the X-ray projection (160) created by means of the computed tomography system (190), a piece of information about a current maintenance state of the computed tomography system (190), and
wherein the device (100) is configured to provide, based on the piece of information about the current maintenance state of the computed tomography system (190), the maintenance recommendation (180) for the computed tomography system (190).

12. A computed tomography system (490) comprising a device (100) for determining at least one capturing parameter (450) for capturing X-ray data (492) of a workpiece (410) by means of the computed tomography system (490) according to any one of claims 1-11.

13. A method (500) for determining at least one capturing parameter (150, 450) for capturing an X-ray projection (192, 492) of a workpiece (110, 410) by means of a computed tomography system (190, 490), the method (500) comprising:
determining (501) measurement data (122) about the workpiece (110, 410), wherein the measurement data (122) include information about an average physical density of the workpiece (110, 410) and/or include a mass of the workpiece (110); and determining (502) the at least one capturing parameter (150, 450) for the computed tomography system (190, 490) based on the measurement data (122) and using a prediction model (140),
wherein the prediction model (140) comprises a self-learning algorithmic method and is based on a plurality of data sets, wherein each of the data sets comprises at least one of the following pieces of information:
a test task, an object shape of a workpiece, a density distribution of a workpiece, a physical density of a workpiece, a mass of the workpiece, an X-ray projection of a workpiece, a CT volume data set of a workpiece, a capturing parameter of an X-ray projection and/or of a CT volume data set, a status information relating to the computed tomography system, one or more measurement data about a workpiece, one or more X-ray data about a workpiece, a piece of information about an image quality of X-ray data of a workpiece.

14. A computer program with a program code for carrying out the method (500) according to claim 13, when the program runs on a computer.

## Revendications

1. Dispositif (100) pour déterminer au moins un paramètre d'enregistrement (150) pour l'enregistrement d'une projection aux rayons X (192) d'une pièce (110) au moyen d'une installation de tomographie assistée par ordinateur (190), le dispositif (100) comprenant :
un dispositif de mesure (120), configuré pour fournir des données de mesure (122) concernant la pièce (110), les données de mesure (122) du dispositif de mesure (120) incluant une densité physique moyenne de la pièce (110) et/ou une masse de la pièce (110) ; et
un analyseur de données (130), configuré pour déterminer, en utilisant les données de mesure (122) du dispositif de mesure (120) et un modèle de prédiction (140), ledit au moins un paramètre d'enregistrement (150) pour l'installation de tomographie assistée par ordinateur (190),
le modèle de prédiction (140) comprenant un procédé algorithmique auto-apprenant et reposant sur une multitude de jeux de données, chacun des jeux de données comprenant au moins l'une des informations suivantes :
une tâche d'inspection, une forme d'une pièce, une distribution de densité d'une pièce, une densité physique d'une pièce, une masse d'une pièce, une projection aux rayons X d'une pièce, un jeu de données volumique CT d'une pièce, un paramètre d'enregistrement d'une projection aux rayons X et/ou d'un jeu de données volumique CT, une information d'état concernant l'installation de tomographie assistée par ordinateur, une ou plusieurs données de mesure concernant une pièce, une ou plusieurs données aux rayons X concernant une pièce, une information concernant la qualité d'image de données aux rayons X d'une pièce.

2. Dispositif (100) selon la revendication 1,
l'analyseur de données (130) étant configuré pour utiliser en outre une projection aux rayons X (160) de la pièce (110) et/ou une définition d'une tâche d'inspection (135) afin de déterminer ledit au moins un paramètre d'enregistrement (150) pour l'installation de tomographie assistée par ordinateur (190).

3. Dispositif (100) selon l'une des revendications précédentes,
le dispositif (100) pouvant être exploité indépendamment de l'installation de tomographie assistée par ordinateur (190).

4. Dispositif (100) selon l'une des revendications précédentes,
les données de mesure (122) du dispositif de mesure (120) incluant une forme de la pièce (110).

5. Dispositif (100) selon l'une des revendications précédentes,
le dispositif (100) étant configuré pour déterminer une densité physique de la pièce (110) et, sur cette base, déterminer ledit au moins un paramètre d'enregistrement (150) pour l'installation de tomographie assistée par ordinateur et/ou un paramètre d'enregistrement pour une projection aux rayons X de la pièce (110) et/ou un paramètre concernant un spectre de rayons X, et/ou
le dispositif (100) étant configuré pour déterminer, sur la base de la densité physique et d'une projection aux rayons X de la pièce (110), une distribution de densité de la pièce (110) et pour déterminer, sur la base de la distribution de densité de la pièce (110), ledit au moins un paramètre d'enregistrement (150) pour l'installation de tomographie assistée par ordinateur.

6. Dispositif (100) selon l'une des revendications précédentes,
dans lequel le dispositif de mesure (120) comprend un capteur (124) pour déterminer une masse, afin de déterminer la masse de la pièce (110) ; et
dans lequel le dispositif de mesure (120) comprend en outre un capteur stéréoscopique (126) pour déterminer la forme de la pièce (110) ;
le dispositif de mesure (120) étant configuré pour déterminer la densité physique de la pièce (110) sur la base de la masse et de la forme de la pièce (120).

7. Dispositif (100) selon l'une des revendications précédentes,
le dispositif (100) étant configuré pour déterminer la forme de la pièce (110) et pour fournir, en utilisant la forme de la pièce (110), un facteur de grandissement pour l'installation de tomographie assistée par ordinateur (190) et/ou pour une projection aux rayons X, et/ou
le dispositif (100) étant configuré pour obtenir, en utilisant la forme de la pièce (110) et/ou la définition d'une tâche d'inspection (135), un paramètre d'enregistrement (150) concernant un système d'axes de l'installation de tomographie assistée par ordinateur (190).

8. Dispositif (100) selon l'une des revendications précédentes,
dans lequel le dispositif de mesure (120) comprend un capteur de fluorescence aux rayons X ; et
le dispositif (100) étant configuré pour déterminer, en utilisant des données du capteur de fluorescence aux rayons X, ledit au moins un paramètre d'enregistrement (150) pour l'installation de tomographie assistée par ordinateur (190).

9. Dispositif (100) selon l'une des revendications précédentes,
dans lequel au moins un paramètre d'enregistrement (150) déterminé par l'analyseur de données (130) comprend au moins l'un des paramètres suivants :
un spectre de rayons X, une tension de tube à rayons X, une préfiltration physique, un produit courant-temps, un facteur de grandissement, un nombre de projections, un paramètre concernant un système d'axes, un mode de mesure, une taille du point focal, une intensité, une résolution spatiale de l'image globale.

10. Dispositif (100) selon l'une des revendications précédentes,
l'analyseur de données (130) étant configuré pour fournir, en utilisant une projection aux rayons X (160) de la pièce (110) réalisée au moyen de l'installation de tomographie assistée par ordinateur (190) et en utilisant le modèle de prédiction (140), une recommandation de maintenance (180) pour l'installation de tomographie assistée par ordinateur (190),
le modèle de prédiction (140) comprenant un procédé algorithmique auto-apprenant et le modèle de prédiction (140) reposant sur des informations concernant une multitude de projections aux rayons X de la pièce (110) et/ou d'autres pièces, réalisées au préalable au moyen de l'installation de tomographie assistée par ordinateur (190) et/ou d'autres installations de tomographie assistée par ordinateur.

11. Dispositif (100) selon la revendication 10,
l'analyseur de données (130) étant configuré pour déterminer, sur la base de la projection aux rayons X (160) de la pièce (110) réalisée au moyen de l'installation de tomographie assistée par ordinateur (190), une information concernant la qualité d'image de la projection aux rayons X (160) réalisée au moyen de l'installation de tomographie assistée par ordinateur (190), et
l'analyseur de données (130) étant configuré pour déterminer, sur la base de l'information concernant la qualité d'image de la projection aux rayons X (160) réalisée au moyen de l'installation de tomographie assistée par ordinateur (190), une information concernant un état de maintenance actuel de l'installation de tomographie assistée par ordinateur (190), et
le dispositif (100) étant configuré pour fournir, sur la base de l'information concernant l'état de maintenance actuel de l'installation de tomographie assistée par ordinateur (190), la recommandation de maintenance (180) pour l'installation de tomographie assistée par ordinateur (190).

12. Installation de tomographie assistée par ordinateur (490) comprenant un dispositif (100) selon l'une des revendications 1 à 11, destiné à déterminer au moins un paramètre d'enregistrement (450) pour l'enregistrement de données aux rayons X (492) d'une pièce (410) au moyen de l'installation de tomographie assistée par ordinateur (490).

13. Procédé (500) pour déterminer au moins un paramètre d'enregistrement (150, 450) pour l'enregistrement d'une projection aux rayons X (192, 492) d'une pièce (110, 410) au moyen d'une installation de tomographie assistée par ordinateur (190, 490), le procédé (500) comprenant le fait de :
déterminer (501) des données de mesure (122) concernant la pièce (110, 410), les données de mesure (122) incluant des informations concernant une densité physique moyenne de la pièce (110, 410) et/ou une masse de la pièce (110) ; et
déterminer (502) ledit au moins un paramètre d'enregistrement (150, 450) pour l'installation de tomographie assistée par ordinateur (190, 490) sur la base des données de mesure (122) et en utilisant un modèle de prédiction (140),
le modèle de prédiction (140) comprenant un procédé algorithmique auto-apprenant et reposant sur une multitude de jeux de données, chacun des jeux de données comprenant au moins l'une des informations suivantes :
une tâche d'inspection, une forme d'une pièce, une distribution de densité d'une pièce, une densité physique d'une pièce, une masse d'une pièce, une projection aux rayons X d'une pièce, un jeu de données volumique CT d'une pièce, un paramètre d'enregistrement d'une projection aux rayons X et/ou d'un jeu de données volumique CT, une information d'état concernant l'installation de tomographie assistée par ordinateur, une ou plusieurs données de mesure concernant une pièce, une ou plusieurs données aux rayons X concernant une pièce, une information concernant la qualité d'image de données aux rayons X d'une pièce.

14. Programme informatique comprenant un code de programme pour mettre en œuvre le procédé (500) selon la revendication 13 lorsque le programme est exécuté sur un ordinateur.
